# EUROPEAN PATENT APPLICATION

(11) **EP 4 369 844 A1**
(43) Date of publication of application: **15.05.2024**
(21) Application number: 22848126.3
(22) Date of filing: 22.06.2022
(51) Int. Cl.: H04W 76/11, H04W 4/70

(54) **COMMUNICATION METHOD, APPARATUS AND SYSTEM**

(30) Priority: 29.07.2021 CN 202110866932
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN); WANG, Rui, Shenzhen, Guangdong 518129 (CN); SHI, Yulong, Shenzhen, Guangdong 518129 (CN)
(74) Representative: Maiwald GmbH
(86) International application number: PCT/CN2022/100387
(87) International publication number: WO 2023/005519

(57) **Abstract**

Embodiments of this application provide a communication method, apparatus, and system. The communication method may be applied to a user equipment-to-network relay U2N relay scenario. In the communication method, relay UE receives a first MAC PDU sent by a base station. The first MAC PDU includes identity information and control information of remote UE. The relay UE sends a second MAC PDU to the remote UE through a sidelink. The second MAC PDU includes second information, and the second information indicates that the second MAC PDU includes the control information. Therefore, the method can resolve a technical problem that control information (for example, information about bit rate recommendation) cannot be exchanged between the base station and the remote UE through a MAC layer because there is no MAC entity for end-to-end communication between the remote UE and the base station in the U2N relay communication scenario.

## Description

This application claims priority to Chinese Patent Application No. 202110866932.4, filed with the China National Intellectual Property Administration on July 29, 2021 and entitled "COMMUNICATION METHOD, APPARATUS, AND SYSTEM", which is incorporated herein by reference in its entirety.

### TECHNICAL FIELD

This application relates to the wireless communication field, and in particular, to a communication method, apparatus, and system.

### BACKGROUND

In a wireless communication system, user equipments (user equipment, UE) may directly communicate with each other. An interface between the UEs is referred to as a PC5 interface, and a communication link between the UEs is referred to as a sidelink (sidelink, SL). A typical application scenario in which SL communication is performed between the UEs is vehicle-to-everything (vehicle-to-everything, V2X). In a V2X system, each vehicle is one UE, and data may be directly transmitted between the UEs through the sidelink instead of a network.

Based on a PC5 interface communication technology between UEs, a UE-to-network relay (UE-to-Network Relay, U2N Relay) technology is further developed. U2N relay is a method in which relay UE (Relay UE) provides relay communication for remote UE (Remote UE). That is, the remote UE accesses a network by using the relay UE.

However, in a U2N relay communication scenario, because there is no MAC entity for end-to-end communication between remote user equipment (Remote UE) and a radio access network device, how the access network device sends control information to the remote UE or how the remote UE sends control information to the radio access network is a technical problem that needs to be urgently resolved. For example, in the U2N relay scenario, because there is no MAC entity for end-to-end communication between the remote UE and the radio access network device, there is a technical problem that a recommended bit rate MAC CE between the radio access network device and the remote UE cannot be exchanged.

### SUMMARY

Embodiments of this application provide a communication method, apparatus, and system, to resolve a problem that control information cannot be exchanged between a radio access network device and remote UE through a MAC layer in a U2N relay scenario, for example, to resolve a technical problem that a recommended bit rate MAC CE between the radio access network device and the remote UE cannot be exchanged because there is no MAC entity for end-to-end communication between the remote UE and the radio access network device in the U2N relay scenario.

To achieve the foregoing objectives, the following technical solutions are used in embodiments of this application.

According to a first aspect, a communication method is provided. A communication apparatus that performs the communication method may be a first terminal device, or may be a module, for example, a chip or a chip system, used in the first terminal device. The following is described by using an example in which an execution body is the first terminal device. The communication method may include: receiving a first MAC PDU from a radio access network device, where the first MAC PDU includes first information that identifies a second terminal device and control information; and sending a second MAC PDU to the second terminal device through a sidelink, where the second MAC PDU includes second information, and the second information indicates that the second MAC PDU includes the control information. The first terminal device may be a relay terminal device, the second terminal device may be a remote terminal device, and the remote terminal device communicates with the radio access network device by using the relay terminal device. Based on the communication method, the radio access network device may send the control information to the remote terminal device by using the relay terminal device and by using MAC layer control signaling MAC CE.

With reference to the first aspect, in a possible implementation, the second MAC PDU includes a second MAC subheader and a second MAC CE, the second MAC subheader includes the second information, and the second information indicates that the second MAC CE includes the control information. Based on this, a structure of a MAC PDU is provided, so that the relay terminal device sends the control information to the remote terminal device.

With reference to the first aspect, in a possible implementation, the control information includes information about a recommended bit rate. For example, the control information or the information about the recommended bit rate may be bore in a MAC CE.

With reference to the first aspect, in a possible implementation, the first MAC PDU includes a first MAC CE, and the first MAC CE includes the first information that identifies the second terminal device.

With reference to the first aspect, in a possible implementation, the second information includes a logical channel identity field value.

With reference to the first aspect, in a possible implementation, the first MAC CE and/or the second MAC CE include/includes third information, and the third information indicates identity information of a logical channel corresponding to the control information and/or identity information of a radio bearer corresponding to the control information.

With reference to the first aspect, in a possible implementation, the first information that identifies the second terminal device includes: a cell radio network temporary identifier C-RNTI of the second terminal device, and/or identity information allocated by the first terminal device or the radio access network device to the second terminal device.

With reference to the first aspect, in a possible implementation, the relay terminal device may determine, based on the first information that identifies the second terminal device, to send the second MAC PDU to the second terminal device through the sidelink.

According to a second aspect, a communication method is provided. A communication apparatus that performs the communication method may be a radio access network device, or may be a module, for example, a chip or a chip system, used in the radio access network device. The following is described by using an example in which an execution body is the radio access network device. The communication method may include: generating a first MAC PDU, where the first MAC PDU includes first information that identifies a second terminal device and control information; and sending the first MAC PDU to a first terminal device. The first terminal device may be a relay terminal device, the second terminal device may be a remote terminal device, the second terminal device communicates with the radio access network device by using the first terminal device, the radio access network device communicates with the first terminal device through a Uu interface, and there is a sidelink between the first terminal device and the second terminal device. Based on the communication method, the radio access network device may send the control information to the relay terminal device by using MAC layer control signaling MAC CE, so that the relay terminal device may send the control information to the remote terminal device by using the MAC layer control signaling MAC CE.

With reference to the second aspect, in a possible implementation, the control information includes information about a recommended bit rate.

With reference to the second aspect, in a possible implementation, the first MAC PDU includes a first MAC CE, and the first MAC CE includes the first information that identifies the second terminal device.

With reference to the second aspect, in a possible implementation, the first MAC PDU includes a first MAC CE, the first MAC CE includes third information, and the third information indicates identity information of a logical channel corresponding to the control information or identity information of a radio bearer corresponding to the control information.

With reference to the second aspect, in a possible implementation, the first information that identifies the second terminal device includes: a cell radio network temporary identifier C-RNTI of the second terminal device, and/or identity information allocated by the first terminal device or the radio access network device to the second terminal device.

According to a third aspect, a communication method is provided. A communication apparatus that performs the communication method may be a second terminal device, or may be a module, for example, a chip or a chip system, used in the second terminal device. The following is described by using an example in which an execution body is the second terminal device. The communication method may include: receiving, through a sidelink, a second MAC PDU sent by a first terminal device, where the second MAC PDU includes second information, and the second information indicates that the second MAC PDU includes control information. The first terminal device may be a relay terminal device, the second terminal device may be a remote terminal device, the second terminal device communicates with a radio access network device by using the first terminal device, the radio access network device communicates with the first terminal device through a Uu interface, and the first terminal device communicates with the second terminal device through a sidelink.

With reference to the third aspect, in a possible implementation, the second MAC PDU includes the second information, and the second information indicates that the second MAC PDU includes the control information. For example, that the second MAC PDU includes the second information, and the second information indicates that the second MAC PDU includes the control information may specifically include: the second MAC PDU includes a second MAC subheader and a second MAC CE, the second MAC subheader includes the second information, and the second information indicates that the second MAC CE includes the control information.

With reference to the third aspect, in a possible implementation, the control information includes information about a recommended bit rate.

With reference to the third aspect, in a possible implementation, the second information includes a logical channel identity field value.

With reference to the third aspect, in a possible implementation, the second MAC CE includes third information, and the third information indicates identity information of a logical channel corresponding to the control information or identity information of a radio bearer corresponding to the control information.

According to a fourth aspect, a communication method is provided. A communication apparatus that performs the communication method may be a first terminal device, or may be a module, for example, a chip or a chip system, used in the first terminal device. The following is described by using an example in which an execution body is the first terminal device. The communication method may include: receiving, through a sidelink, a first MAC PDU sent by a second terminal device, where the first MAC PDU includes first information, and the first information indicates that the first MAC PDU includes control information; and sending a second MAC PDU to a radio access network device, where the second MAC PDU includes second information that identifies the second terminal device and the control information. The first terminal device may be a relay terminal device, the second terminal device may be a remote terminal device, the second terminal device communicates with the radio access network device by using the first terminal device, the radio access network device communicates with the first terminal device through a Uu interface, and the first terminal device communicates with the second terminal device through a PC5 interface.

With reference to the fourth aspect, in a possible implementation, the first MAC PDU includes the first information, and the first information indicates that the first MAC PDU includes the control information. For example, that the first MAC PDU includes the first information, and the first information indicates that the first MAC PDU includes the control information may specifically include: the first MAC PDU includes a first MAC subheader and a first MAC CE, the first MAC subheader includes the first information, and the first information indicates that the first MAC CE includes the control information.

With reference to the fourth aspect, in a possible implementation, the control information includes information about a recommended bit rate.

With reference to the fourth aspect, in a possible implementation, that the second MAC PDU includes identity information that identifies the second terminal device includes: the second MAC PDU includes a second MAC CE, and the second MAC CE includes the second information that identifies the second terminal device.

With reference to the fourth aspect, in a possible implementation, the first information includes a logical channel identity field value.

With reference to the fourth aspect, in a possible implementation, the first MAC CE and/or the second MAC CE include/includes third information, and the third information indicates identity information of a logical channel corresponding to the control information or identity information of a radio bearer corresponding to the control information.

With reference to the fourth aspect, in a possible implementation, the second information that identifies the second terminal device includes: a cell radio network temporary identifier C-RNTI of the second terminal device, and/or identity information allocated by the first terminal device or the radio access network device to the second terminal device.

With reference to the fourth aspect, in a possible implementation, the method further includes: determining, based on the second information that identifies the second terminal device, to send the second MAC PDU to the radio access network device.

According to a fifth aspect, a communication method is provided. A communication apparatus that performs the communication method may be a radio access network device, or may be a module, for example, a chip or a chip system, used in the radio access network device. The following is described by using an example in which an execution body is the radio access network device. The communication method may include: receiving a second MAC PDU sent by a first terminal device, where the second MAC PDU includes second information that identifies a second terminal device and control information. The radio access network device communicates with the first terminal device through a Uu interface, and there is a sidelink between the first terminal device and the second terminal device. The first terminal device may be a relay terminal device, the second terminal device may be a remote terminal device, and the second terminal device communicates with the radio access network device by using the first terminal device.

With reference to the fifth aspect, in a possible implementation, the control information includes information about a recommended bit rate.

With reference to the fifth aspect, in a possible implementation, the second MAC PDU includes identity information that identifies the second terminal device. For example, that the second MAC PDU includes identity information that identifies the second terminal device may specifically include: the second MAC PDU includes a second MAC CE, and the second MAC CE includes the second information that identifies the second terminal device.

With reference to the fifth aspect, in a possible implementation, the second MAC CE includes third information, and the third information indicates identity information of a logical channel corresponding to the control information or identity information of a radio bearer corresponding to the control information.

With reference to the fifth aspect, in a possible implementation, the second information that identifies the second terminal device includes: a cell radio network temporary identifier C-RNTI of the second terminal device, and/or identity information allocated by the first terminal device or the radio access network device to the second terminal device.

According to a sixth aspect, a communication method is provided. A communication apparatus that performs the communication method may be a second terminal device, or may be a module, for example, a chip or a chip system, used in the second terminal device. The following is described by using an example in which an execution body is the second terminal device. The communication method may include: sending, through a sidelink, a first MAC PDU to a first terminal device, where the first MAC PDU includes first information, and the first information indicates that the first MAC PDU includes control information. The first terminal device may be a relay terminal device, the second terminal device may be a remote terminal device, the second terminal device communicates with a radio access network device by using the first terminal device, the radio access network device communicates with the first terminal device through a Uu interface, and the first terminal device communicates with the second terminal device through a PC5 interface.

With reference to the sixth aspect, in a possible implementation, that the first MAC PDU includes first information, and the first information indicates that the first MAC PDU includes control information includes: the first MAC PDU includes a first MAC subheader and a first MAC CE, the first MAC subheader includes the first information, and the first information indicates that the first MAC CE includes the control information.

With reference to the sixth aspect, in a possible implementation, the control information includes information about a recommended bit rate.

With reference to the sixth aspect, in a possible implementation, the first information includes a logical channel identity field value.

With reference to the sixth aspect, in a possible implementation, the first MAC CE includes third information, and the third information indicates identity information of a logical channel corresponding to the control information and/or identity information of a radio bearer corresponding to the control information.

According to a seventh aspect, a communication method is provided. A communication apparatus that performs the communication method may be a first terminal device, or may be a module, for example, a chip or a chip system, used in the first terminal device. The following is described by using an example in which an execution body is the first terminal device. The communication method may include: receiving a first MAC PDU from a radio access network device, where the first MAC PDU includes first indication information, the first indication information indicates that the first MAC PDU includes: first information that identifies a second terminal device, second information, and control information, and the second information indicates that the first MAC PDU includes the control information; and sending a second MAC PDU to the second terminal device through a sidelink, where the second MAC PDU includes second indication information, the second indication information indicates that the second MAC PDU includes: the second information and the control information, and the second information indicates that the second MAC PDU includes the control information. The first terminal device may be a relay terminal device, the second terminal device may be a remote terminal device, the second terminal device communicates with the radio access network device by using the first terminal device, the radio access network device communicates with the first terminal device through a Uu interface, and the first terminal device communicates with the second terminal device through a PC5 interface.

With reference to the seventh aspect, in a possible implementation, the first MAC PDU includes a first MAC subheader and a first MAC CE, the first MAC subheader includes the first indication information, and the first MAC CE includes: the first information that identifies the second terminal device, the second information, and the control information.

With reference to the seventh aspect, in a possible implementation, the second MAC PDU includes a second MAC subheader and a second MAC CE, the second MAC subheader includes the second indication information, and the second MAC CE includes: the second information and the control information.

With reference to the seventh aspect, in a possible implementation, the first indication information includes a logical channel identity field value that identifies a MAC CE type on the Uu interface.

With reference to the seventh aspect, in a possible implementation, the second indication information includes a logical channel identity field value that identifies a MAC CE type on the PC5 interface.

With reference to the seventh aspect, in a possible implementation, the control information includes information about a recommended bit rate.

With reference to the seventh aspect, in a possible implementation, the first MAC CE and/or the second MAC CE include/includes third information, and the third information indicates identity information of a logical channel corresponding to the control information and/or identity information of a radio bearer corresponding to the control information.

With reference to the seventh aspect, in a possible implementation, the first information that identifies the second terminal device includes:
a cell radio network temporary identifier C-RNTI of the second terminal device, and/or identity information allocated by the first terminal device or the radio access network device to the second terminal device.

With reference to the seventh aspect, in a possible implementation, the method further includes: determining, based on the first information that identifies the second terminal device, to send the second MAC PDU to the second terminal device through the sidelink.

According to an eighth aspect, a communication method is provided. A communication apparatus that performs the communication method may be a radio access network device, or may be a module, for example, a chip or a chip system, used in the radio access network device. The following is described by using an example in which an execution body is the radio access network device. The communication method may include: generating a first MAC PDU, where the first MAC PDU includes first indication information, the first indication information indicates that the first MAC PDU includes: first information that identifies a second terminal device, second information, and control information, and the second information indicates that the first MAC PDU includes the control information; and sending the first MAC PDU to a first terminal device. The radio access network device communicates with the first terminal device through a Uu interface, and there is a sidelink between the first terminal device and the second terminal device. The first terminal device may be a relay terminal device, the second terminal device may be a remote terminal device, and the second terminal device communicates with the radio access network device by using the first terminal device.

With reference to the eighth aspect, in a possible implementation, the first MAC PDU includes a first MAC subheader and a first MAC CE, the first MAC subheader includes the first indication information, and the first MAC CE includes: the first information that identifies the second terminal device, the second information, and the control information.

With reference to the eighth aspect, in a possible implementation, the first indication information includes a logical channel identity field value that identifies a MAC CE type on the Uu interface.

With reference to the eighth aspect, in a possible implementation, the control information includes information about a recommended bit rate.

With reference to the eighth aspect, in a possible implementation, the first MAC CE includes third information, and the third information indicates identity information of a logical channel corresponding to the control information or identity information of a radio bearer corresponding to the control information.

With reference to the eighth aspect, in a possible implementation, the first information that identifies the second terminal device includes:
a cell radio network temporary identifier C-RNTI of the second terminal device, and/or identity information allocated by the first terminal device or the radio access network device to the second terminal device.

According to a ninth aspect, a communication method is provided. A communication apparatus that performs the communication method may be a second terminal device, or may be a module, for example, a chip or a chip system, used in the second terminal device. The following is described by using an example in which an execution body is the second terminal device. The communication method may include: receiving, by using a sidelink, a second MAC PDU sent by a first terminal device, where the second MAC PDU includes second indication information, the second indication information indicates that the second MAC PDU includes: second information and control information, and the second information indicates that the second MAC PDU includes the control information. The first terminal device may be a relay terminal device, the second terminal device may be a remote terminal device, the second terminal device communicates with a radio access network device by using the first terminal device, the radio access network device communicates with the first terminal device through a Uu interface, and the first terminal device communicates with the second terminal device through a PC5 interface.

With reference to the ninth aspect, in a possible implementation, the second MAC PDU includes a second MAC subheader and a second MAC CE, the second MAC subheader includes the second indication information, and the second MAC CE includes: the second information and the control information.

With reference to the ninth aspect, in a possible implementation, the second indication information includes a logical channel identity field value that identifies a MAC CE type on a PC5 interface.

With reference to the ninth aspect, in a possible implementation, the control information includes information about a recommended bit rate.

With reference to the ninth aspect, in a possible implementation, the second MAC CE includes third information, and the third information indicates identity information of a logical channel corresponding to the control information or identity information of a radio bearer corresponding to the control information.

According to a tenth aspect, a communication method is provided. A communication apparatus that performs the communication method may be a first terminal device, or may be a module, for example, a chip or a chip system, used in the first terminal device. The following is described by using an example in which an execution body is the first terminal device. The communication method may include: receiving, through a sidelink, a first MAC PDU sent by a second terminal device, where the first MAC PDU includes first indication information, the first indication information indicates that the first MAC PDU includes: first information and control information, and the first information indicates that the first MAC PDU includes the control information; and sending a second MAC PDU to a radio access network device, where the second MAC PDU includes second indication information, the second indication information indicates that the second MAC PDU includes: second information that identifies the second terminal device, the first information, and the control information, and the first information indicates that the second MAC PDU includes the control information. The first terminal device may be a relay terminal device, the second terminal device may be a remote terminal device, the second terminal device communicates with the radio access network device by using the first terminal device, the radio access network device communicates with the first terminal device through a Uu interface, and the first terminal device communicates with the second terminal device through a PC5 interface.

With reference to the tenth aspect, in a possible implementation, the second MAC PDU includes a second MAC subheader and a second MAC CE, the second MAC subheader includes the second indication information, and the second MAC CE includes: the second information that identifies the second terminal device, the first information, and the control information.

With reference to the tenth aspect, in a possible implementation, the first MAC PDU includes a first MAC subheader and a first MAC CE, the first MAC subheader includes the first indication information, and the first MAC CE includes the first information and the control information.

With reference to the tenth aspect, in a possible implementation, the first indication information includes a logical channel identity field value that identifies a MAC CE type on the PC5 interface.

With reference to the tenth aspect, in a possible implementation, the second indication information includes a logical channel identity field value that identifies a MAC CE type on the Uu interface.

With reference to the tenth aspect, in a possible implementation, the control information includes information about a recommended bit rate.

With reference to the tenth aspect, in a possible implementation, the first MAC CE and/or the second MAC CE include/includes third information, and the third information indicates identity information of a logical channel corresponding to the control information or identity information of a radio bearer corresponding to the control information.

With reference to the tenth aspect, in a possible implementation, the second information that identifies the second terminal device includes:
a cell radio network temporary identifier C-RNTI of the second terminal device, and/or identity information allocated by the first terminal device or the radio access network device to the second terminal device.

With reference to the tenth aspect, in a possible implementation, the method further includes: determining, based on the second information that identifies the second terminal device, to send the second MAC PDU to the radio access network device.

According to an eleventh aspect, a communication method is provided. A communication apparatus that performs the communication method may be a radio access network device, or may be a module, for example, a chip or a chip system, used in the radio access network device. The following is described by using an example in which an execution body is the radio access network device. The communication method may include: receiving a second MAC PDU sent by a first terminal device, where the second MAC PDU includes second indication information, the second indication information indicates that the second MAC PDU includes: second information that identifies a second terminal device, first information, and control information, the first information indicates that the second MAC PDU includes the control information, the radio access network device communicates with the first terminal device through a Uu interface, and there is a sidelink between the first terminal device and the second terminal device. The first terminal device may be a relay terminal device, the second terminal device may be a remote terminal device, and the second terminal device communicates with the radio access network device by using the first terminal device.

With reference to the eleventh aspect, in a possible implementation, the second MAC PDU includes a second MAC subheader and a second MAC CE, the second MAC subheader includes the second indication information, and the second MAC CE includes: the second information that identifies the second terminal device, the first information, and the control information.

With reference to the eleventh aspect, in a possible implementation, the second indication information includes a logical channel identity field value that identifies a MAC CE type on the Uu interface.

With reference to the eleventh aspect, in a possible implementation, the control information includes information about a recommended bit rate.

With reference to the eleventh aspect, in a possible implementation, the second MAC CE includes third information, and the third information indicates identity information of a logical channel corresponding to the control information or identity information of a radio bearer corresponding to the control information.

With reference to the eleventh aspect, in a possible implementation, the second information that identifies the second terminal device includes:
a cell radio network temporary identifier C-RNTI of the second terminal device, and/or identity information allocated by the first terminal device or the radio access network device to the second terminal device.

According to a twelfth aspect, a communication method is provided. A communication apparatus that performs the communication method may be a second terminal device, or may be a module, for example, a chip or a chip system, used in the second terminal device. The following is described by using an example in which an execution body is the second terminal device. The communication method may include: sending a first MAC PDU to a first terminal device through a sidelink, where the first MAC PDU includes first indication information, the first indication information indicates that the first MAC PDU includes: first information and control information, and the first information indicates that the first MAC PDU includes the control information. The first terminal device may be a relay terminal device, the second terminal device may be a remote terminal device, the second terminal device communicates with a radio access network device by using the first terminal device, the radio access network device communicates with the first terminal device through a Uu interface, and the first terminal device communicates with the second terminal device through a PC5 interface.

With reference to the twelfth aspect, in a possible implementation, the first MAC PDU includes a first MAC subheader and a first MAC CE, the first MAC subheader includes the first indication information, and the first MAC CE includes the first information and the control information.

With reference to the twelfth aspect, in a possible implementation, the first indication information includes a logical channel identity field value that identifies a MAC CE type on the PC5 interface.

With reference to the twelfth aspect, in a possible implementation, the control information includes information about a recommended bit rate.

With reference to the twelfth aspect, in a possible implementation, the first MAC CE includes third information, and the third information indicates identity information of a logical channel corresponding to the control information or identity information of a radio bearer corresponding to the control information.

According to a thirteenth aspect, this application provides a communication apparatus. The communication apparatus may be a first terminal device or a chip or a chip system in the first terminal device. Alternatively, the communication apparatus may be a functional module that is in the first terminal device and that is configured to implement the method according to the first aspect or any possible design of the first aspect, a functional module that is in the first terminal device and that is configured to implement the method according to the fourth aspect or any possible design of the fourth aspect, a functional module that is in the first terminal device and that is configured to implement the method according to the seventh aspect or any possible design of the seventh aspect, or a functional module that is in the first terminal device and that is configured to implement the method according to the tenth aspect or any possible design of the tenth aspect. The communication apparatus may implement functions performed by the first terminal device in the foregoing aspects or possible designs. The functions may be implemented by using a hardware circuit, or may be implemented by hardware executing corresponding software, or may be implemented by using software. The hardware and/or the software may include one or more modules corresponding to the foregoing functions.

For technical effects of the thirteenth aspect, refer to the foregoing aspects or possible designs. Details are not described herein again.

According to a fourteenth aspect, this application provides a communication apparatus. The communication apparatus may be a radio access network device or a chip or a chip system in the radio access network device. Alternatively, the communication apparatus may be a functional module that is in the radio access network device and that is configured to implement the method according to the second aspect or any possible design of the second aspect, a functional module that is in the radio access network device and that is configured to implement the method according to the fifth aspect or any possible design of the fifth aspect, a functional module that is in the radio access network device and that is configured to implement the method according to the eighth aspect or any possible design of the eighth aspect, or a functional module that is in the radio access network device and that is configured to implement the method according to the eleventh aspect or any possible design of the eleventh aspect. The communication apparatus may implement functions performed by a first terminal device in the foregoing aspects or possible designs. The functions may be implemented by using a hardware circuit, or may be implemented by hardware executing corresponding software, or may be implemented by using software. The hardware and/or the software may include one or more modules corresponding to the foregoing functions.

For technical effects of the fourteenth aspect, refer to the foregoing aspects or possible designs. Details are not described herein again.

According to a fifteenth aspect, this application provides a communication apparatus. The communication apparatus may be a second terminal device or a chip or a chip system in the second terminal device. Alternatively, the communication apparatus may be a functional module that is in the second terminal device and that is configured to implement the method according to the third aspect or any possible design of the third aspect, a functional module that is in the second terminal device and that is configured to implement the method according to the sixth aspect or any possible design of the sixth aspect, a functional module that is in the second terminal device and that is configured to implement the method according to the ninth aspect or any possible design of the ninth aspect, or a functional module that is in the second terminal device and that is configured to implement the method according to the twelfth aspect or any possible design of the twelfth aspect. The communication apparatus may implement functions performed by a first terminal device in the foregoing aspects or possible designs. The functions may be implemented by using a hardware circuit, or may be implemented by hardware executing corresponding software, or may be implemented by using software. The hardware and/or the software may include one or more modules corresponding to the foregoing functions.

For technical effects of the fifteenth aspect, refer to the foregoing aspects or possible designs. Details are not described herein again.

According to a sixteenth aspect, a communication apparatus is provided, including: a processor and a memory. The memory is configured to store computer-executable instructions. When the communication apparatus is run, the processor executes the computer-executable instructions stored in the memory, to enable the communication apparatus to perform the communication method according to any one of the first aspect to the twelfth aspect and the possible implementations thereof.

According to a seventeenth aspect, a communication apparatus is provided, including: a processor. The processor is configured to: be coupled to a memory, and read instructions in the memory. After the processor reads the instructions in the memory, the communication method according to any one of the first aspect to the twelfth aspect and the possible implementations thereof is performed based on the instructions.

In a possible implementation, the communication apparatus further includes the memory, and the memory is configured to store computer instructions.

In a possible implementation, the communication apparatus further includes a communication interface, and the communication interface is configured by the communication apparatus to communicate with another device. For example, the communication interface may be a transceiver, an input/output interface, an interface circuit, an output circuit, an input circuit, a pin, a related circuit, or the like.

In a possible implementation, the communication apparatus may be a chip or a chip system. When the communication apparatus is a chip system, the communication apparatus may include a chip, or may include a chip and another discrete device.

In a possible implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighteenth aspect, a computer-readable storage medium is provided. The computer-readable storage medium stores instructions, and when the instructions are run on a computer, the computer is enabled to perform the communication method according to any one of the first aspect to the twelfth aspect and the possible implementations thereof.

According to a nineteenth aspect, a computer program including instructions is provided. When the computer program is run on a computer, the computer is enabled to perform the communication method according to any one of the first aspect to the twelfth aspect and the possible implementations thereof.

According to a twentieth aspect, a communication system is provided. The communication system includes at least one of the following: a first terminal device that performs the communication method according to the first aspect, the fourth aspect, the seventh aspect, the tenth aspect, and the possible implementations thereof, a radio access network device that performs the communication method according to the second aspect, the fifth aspect, the eighth aspect, the eleventh aspect, and the possible implementations thereof, and a second terminal device that performs the communication method according to the third aspect, the sixth aspect, the ninth aspect, the twelfth aspect and the possible implementations thereof.

For technical effects brought by any design manner of the sixteenth aspect to the twentieth aspect, refer to technical effects brought by the first aspect to the twelfth aspect and the possible designs thereof. Details are not described herein again.

### BRIEF DESCRIPTION OF DRAWINGS

FIG. 1 is a schematic diagram of a scenario of direct communication between UEs according to an embodiment of this application;
FIG. 2 is a schematic diagram of a structure of a communication network according to an embodiment of this application;
FIG. 3 is a schematic diagram of a communication protocol stack according to an embodiment of this application;
FIG. 4 is a schematic diagram of a method for notifying a recommended bit rate according to an embodiment of this application;
FIG. 5 is a schematic diagram of a method for notifying a recommended bit rate according to an embodiment of this application;
FIG. 6 is a schematic diagram of a structure of a MAC CE according to an embodiment of this application;
FIG. 7 is a schematic diagram of a structure of a communication network according to an embodiment of this application;
FIG. 8 is a schematic diagram of a structure of a communication network according to an embodiment of this application;
FIG. 9 is a schematic diagram of a structure of a communication apparatus according to an embodiment of this application;
FIG. 10 is a schematic flowchart of a communication method according to an embodiment of this application;
FIG. 11 is a schematic diagram of a communication method based on a MAC PDU structure according to an embodiment of this application;
FIG. 12 is a schematic flowchart of a communication method according to an embodiment of this application;
FIG. 13 is a schematic flowchart of a communication method according to an embodiment of this application;
FIG. 14 is a schematic diagram of a communication method based on another MAC PDU structure according to an embodiment of this application;
FIG. 15 is a flowchart of another communication method according to an embodiment of this application;
FIG. 16 is a schematic diagram of an adaptation layer control PDU according to an embodiment of this application;
FIG. 17 is a schematic diagram of a control PDU format according to an embodiment of this application; and
FIG. 18 is a schematic diagram of a PDCP control PDU container according to an embodiment of this application.

### DESCRIPTION OF EMBODIMENTS

Before embodiments of this application are described, some terms in embodiments of this application are explained. It should be noted that, the explanations are intended to facilitate understanding of embodiments of this application, but should not be construed as limiting the protection scope required by embodiments of this application.

### 1. Sidelink

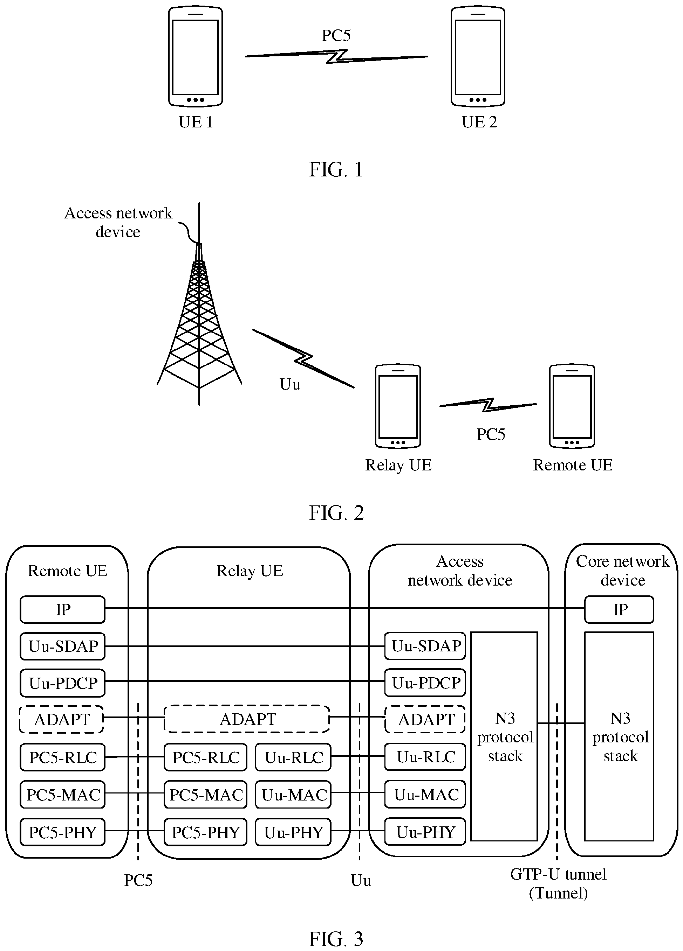

In a conventional wireless communication system, UEs may communicate with each other by using a wireless network, and a data signal between the UEs is forwarded by using an access network device. However, a cellular network centered on a conventional access network device (for example, a conventional base station) has some limitations in terms of data transmission quality and a service range. To meet this requirement, proximity service (proximity service, ProSe) communication emerges, and the UEs may directly communicate with each other without using the access network device. This method can reduce a communication delay between the UEs. A link for direct communication between the UEs may be referred to as a sidelink. A wireless communication interface that is between the UEs and that corresponds to the sidelink is a PC5 interface. The sidelink may also be referred to as a side link, a bylink, a direct communication link, or the like. The PC5 interface may also be referred to as a sidelink interface, a direct communication interface, or the like. FIG. 1 is a schematic diagram of a scenario of direct communication between UEs. As shown in FIG. 1, UE 1 and UE 2 perform sidelink communication by using a PC5 interface. Sidelink communication may be applied to a plurality of scenarios such as a device to device (device to device, D2D) scenario, a machine to machine (machine to machine, M2M) scenario, or a vehicle to everything (vehicle to everything, V2X) scenario.

Currently, the sidelink may support communication manners such as broadcast, unicast, and multicast. A sidelink in a U2N relay scenario in this embodiment of this application relates to unicast communication. Unicast communication is similar to data communication performed after a radio resource control (radio resource control, RRC) protocol connection is established between the UE and a base station, and a unicast connection needs to be first established between two UEs. After the unicast connection is established, the two UEs may perform data communication based on a negotiated identity. The data may or may not be encrypted. Compared with broadcast communication, the unicast communication can be performed only between two UEs between which a unicast connection is established. In the unicast communication, when sending data, the UE may send a source identity and a target identity along with the data. The source identity is allocated by transmitting end UE, and the target identity is an identity allocated by receiving end UE to the unicast connection.

### 2. U2N Relay

To improve network performance, for example, improving network coverage, a U2N relay network architecture is proposed in the background of embodiments of this application, and relay UE (Relay UE) is used to assist communication between remote UE (Remote UE) and a radio access network device. FIG. 2 is a schematic diagram of a structure of a communication network applicable to a U2N relay scenario. The radio access network device communicates with the relay UE through a Uu interface, and the relay UE communicates with the remote UE through a PC5 interface. The Uu interface is generally a wireless communication interface between the radio access network device and a terminal device. The remote UE may establish a connection to the access network device and/or perform data transmission by using the relay UE. In the U2N relay scenario, the relay UE provides a relay service for the remote UE, so that a cell coverage capability can be improved.

In the U2N relay scenario, the relay UE may communicate with the remote UE through a sidelink. For sidelink communication, UEs (including the relay UE and the remote UE) obtain a sidelink resource in two manners. One mode is referred to as a mode 1 (mode 1), and may be understood as scheduling or allocating a resource by the access network device. For example, the access network device schedules the resource by using downlink control information (downlink control information, DCI), or allocates a configuration grant (configured grant) resource by using RRC signaling. Another mode is referred to as a mode 2 (mode 2), and may be understood as selecting a resource by the UE itself. For example, the UE may determine, based on some specific rules, which resources are available and which resources are unavailable, and then select, from the available resources, a resource suitable for a current data transmission requirement to transmit data.

The U2N relay scenario may be implemented based on a layer-2 (Layer-2-based) relay technology. A layer-2-based sidelink relay (Layer-2-based sidelink Relay) technology is used as an example. FIG. 3 is a schematic diagram of a communication protocol stack according to an embodiment of this application. FIG. 3 shows a user plane protocol stack among remote UE, relay UE, an access network device, and a core network device. A protocol stack of the remote UE includes an internet protocol (internet protocol, IP) layer, a service data adaptation protocol (service data adaptation protocol, SDAP) layer (also referred to as a Uu-SDAP layer), a packet data convergence protocol (packet data convergence protocol, PDCP) layer (also referred to as a Uu-PDCP layer), an adaptation (adaptation, ADAPT) layer, a radio link control (radio link control, RLC) layer (also referred to as a PC5-RLC layer), a media access control (media access control, MAC) layer (also referred to as a PC5-MAC layer), and a physical (physical, PHY) layer (also referred to as a PC5-PHY layer) from top to bottom. A protocol stack in the relay UE for communication with the remote UE includes an ADAPT layer, a PC5-RLC layer, a PC5-MAC layer, and a PC5-PHY layer from top to bottom. A protocol stack in the relay UE for communication with the access network device includes an ADAPT layer, a Uu-RLC layer, a Uu-MAC layer, and a Uu-PHY layer from top to bottom. A protocol stack in the access network device for communication with the remote UE includes a Uu-SDAP layer and a Uu-PDCP layer from top to bottom. A protocol stack in the access network device for communication with the relay UE includes an ADAPT layer, a Uu-RLC layer, a Uu-MAC layer, and a Uu-PHY layer from top to bottom. A protocol stack in the access network device for communication with the core network device includes an N3 protocol stack. A protocol stack in the core network device for communication with the remote UE includes an IP layer. A protocol stack in the core network device for communication with the access network device includes an N3 protocol stack.

It may be understood that, based on the communication protocol stack shown in FIG. 3, a data packet of the remote UE is relayed below the PDCP layer of the relay UE. In other words, the relay UE maintains only an RLC bearer used for relay communication. The RLC bearer includes the RLC layer, the MAC layer, and the PHY layer. In addition, in the communication protocol stack shown in FIG. 3, an adaptation layer is added between the RLC layer and the PDCP layer. A main function of the adaptation layer is bearer multiplexing and splitting. That is, different bearers can be multiplexed onto one bearer or one bearer can be split into different bearers. For example, in a downlink direction, one bearer on a link of a Uu interface may include data on a plurality of bearers sent by a base station to a plurality of remote UEs. Remote UE identity information (Remote UE ID) and a bearer identity are added to the data, so that an adaptation layer of the relay UE may correctly map, based on the remote UE identity information and the bearer identity, the data on the bearer of the Uu interface to a bearer corresponding to different remote UEs, thereby implementing splitting of multiplexed data. Similar to the case in the downlink direction, in an uplink direction, the adaptation layer of the relay UE may multiplex bearer data of one or more remote UEs to a bearer of a Uu interface, thereby implementing bearer multiplexing.

For example, based on the communication protocol stack shown in FIG. 3, the ADAPT layer between the remote UE and the relay UE may be configured to support mapping of a plurality of Uu PDCP entities of the remote UE to one SL RLC entity. That is, N: 1 mapping between a Uu DRB and an SL DRB of the remote UE is supported. The ADAPT layer between the relay UE and the access network device is configured to support a plurality of remote UEs in communicating with the access network device by using the same relay UE. The ADAPT layer may carry an identity of the remote UE to identify the corresponding remote UE, or carry a bearer identity to identify a corresponding bearer of the corresponding remote UE. It should be understood that the ADAPT layer is optional (represented by a dashed box). To be specific, there may alternatively be no ADAPT layer between the remote UE and the relay UE, and there may alternatively be no ADAPT layer between the relay UE and the access network device. This is uniformly described herein, and details are not described below.

Radio access network (Radio Access Network, RAN) aided codec adaptation is a technology in which a base station recommends an air interface rate for a voice or video service of user equipment (UE, User Equipment) based on an air interface capability. The recommended air interface rate generally means a bit rate in a unit of kilo bit per second (kilo bit per second, kbps) at an air interface physical layer.

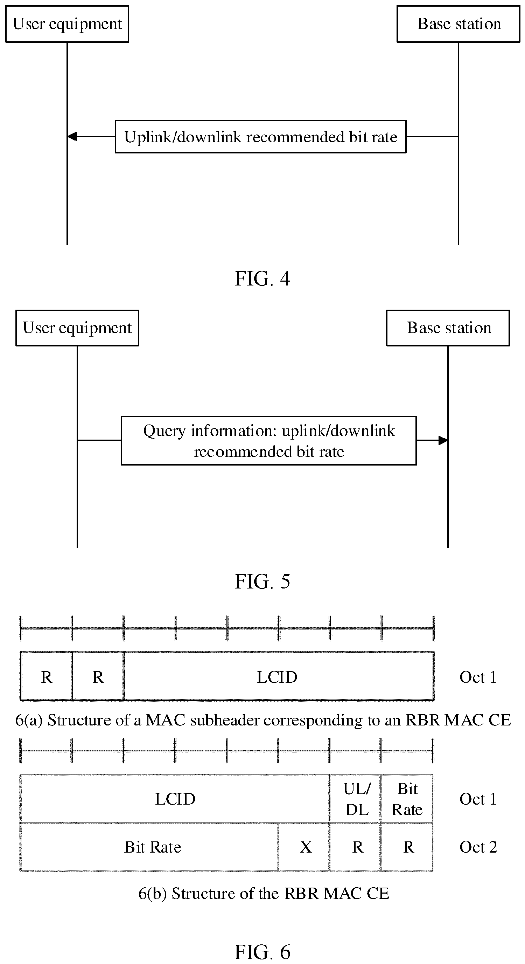

An example in which the base station recommends the UE to increase the bit rate is used to specifically describe a process of the RAN aided codec adaptation. First, FIG. 4 is a flowchart of a method for notifying a recommended bit rate according to an embodiment of this application. A base station in which transmitting end UE is located sends, to UE based on an air interface capability of the base station, information about a recommended bit rate of a logical channel in an uplink and/or downlink transmission direction. For example, the base station sends a recommended bit rate (Recommended Bit Rate, RBR) indication to the UE, to inform the UE of a currently recommended uplink and/or downlink transmission bit rate for a specific logical channel (the bit rate may be greater than the current bit rate). The information about the uplink and/or downlink recommended bit rate or the RBR indication mentioned herein may be bore in a MAC CE sent by the base station in the downlink direction.

Further, FIG. 5 is a flowchart of a method for notifying a recommended bit rate according to an embodiment of this application. Based on the information (for example, the RBR indication received in FIG. 4) about the uplink and/or downlink recommended bit rate received from the base station in FIG. 4, transmitting end UE may initiate an end-to-end bit rate adaptation process with receiving end UE. The transmitting end UE sends a request message to the receiving end UE by using an application layer message, and the request message includes a recommended bit rate in an uplink and/or a downlink transmission direction of a logical channel. After receiving the request message, the receiving end UE sends a query message to a local base station in which the receiving end UE is located, to query whether the local base station in which the receiving end UE is located can support the uplink and/or downlink recommended bit rate requested by the transmitting end UE. Then, the local base station in which the receiving end UE is located notifies, based on a policy of the local base station or a current air interface capability or load and based on a query of the receiving end UE, the receiving end UE of a bit rate that can be implemented, and the receiving end UE returns, to the transmitting end UE by using the application layer message, a bit rate that can be supported by the receiving end UE, so that the transmitting end UE and the receiving end UE of the transmitting end UE can implement uniformity of rates of receiving and transmitting ends. If the base station in which the transmitting end UE is located recommends that the transmitting end UE reduces the bit rate, the receiving end UE may not need to send a query of the recommended bit rate to the local base station, and may directly reduce, based on information about the recommended bit rate that is sent by the transmitting end UE and that is carried in the application layer request message, the bit rate to a rate requested by the transmitting end UE.

Through the foregoing process, bit rate adjustment and adaptation can be implemented between two UEs, thereby properly using an air interface capability of the base station.

In a communication process, a media access control control element (Media Access Control Control Element, MAC CE) is mainly used to bear MAC layer control signaling between a radio access network device (for example, a base station) and UE. A communication protocol defines a specific MAC CE format for bearing specific MAC layer control signaling, and a type of a corresponding MAC CE is uniquely identified by allocating a specific logical channel identity (Logical Channel Identity, LCID).

On air interfaces of the UE and the base station, the signaling used for uplink/downlink bit rate recommendation or an uplink/downlink bit rate query shown in FIG. 4 and FIG. 5 may be implemented by using a media access control control element (Media Access Control Control Element, MAC CE). That is, both the information about the recommended bit rate and information about a bit rate query may be bore in the MAC CE, and sent by the base station to the UE or sent by the UE to the base station. In addition, the information about the bit rate recommendation and query indicated by the MAC CE may be specific to a logical channel in a transmission direction (uplink or downlink) of the UE.

One MAC protocol data unit (Protocol Data Unit, PDU) may include a plurality of MAC subPDUs (MAC subPDUs). The MAC subPDU may include a MAC subheader (MAC subheader) and a MAC CE, or the MAC subPDU may include a MAC subheader and a MAC service data unit (MAC Service Data Unit, MAC SDU), or the MAC subPDU may include only padding (padding) data.

The MAC CE in the MAC subPDU or the MAC subheader corresponding to the MAC CE further includes an LCID field. After receiving the MAC PDU, the base station or the UE may distinguish, by using an LCID field value in the MAC subheader, whether the corresponding MAC subPDU includes a MAC SDU or a MAC CE. If it is determined that the MAC subPDU includes a MAC CE, signaling content bore in the MAC subPDU may be parsed out based on a defined MAC CE format. For example, if the LCID field value is 1 to 32, a type of the MAC subPDU corresponds to the MAC SDU, and the LCID field value corresponds to an ID value of a logical channel used for transmitting the MAC SDU. If the LCID field value in the MAC subPDU received by the UE from the base station (that is, in the downlink direction) is 47, the MAC subPDU includes a recommended bit rate (Recommended Bit Rate, RBR) MAC CE. If the LCID field value in the MAC subPDU received by the base station from the UE (that is, in the uplink direction) is 53, the MAC subPDU includes a recommended bit rate query (Recommended Bit Rate query, RBR query) MAC CE.

FIG. 6 is a schematic diagram of a structure of a MAC CE according to an embodiment of this application. (a) in FIG. 6 shows a structure of a MAC subheader corresponding to an RBR MAC CE, and the MAC subheader is formed by one octet (Oct). (b) in FIG. 6 shows a structure of the RBR MAC CE. A size of the RBR MAC CE is fixed, and the RBR MAC CE is formed by two octets (Oct). The RBR MAC CE includes an LCID field, a UL/DL field, a Bit Rate field, an X field, and an R field. For example, meanings of the fields in FIG. 6 are as follows.

LCID: The field represents an identity of a logical channel corresponding to a recommended bit rate or a recommended bit rate query. A length of the field is 6 bits.

UL/DL: The field indicates whether a recommended bit rate or a recommended bit rate query is applicable to an uplink or a downlink. A length of the field is 1 bit. For example, if the UL/DL field is set to 0, it represents the downlink, and if the UL/DL field is set to 1, it represents the uplink. Certainly, on the contrary, if the UL/DL field is set to 1, it represents the downlink, and if the UL/DL field is set to 0, it represents the uplink.

Bit Rate: The field is referred to as a recommended bit rate suggestion, and the value represents a bit rate that is suggested. For a bit rate recommended query, the value indicates a bit rate that is required. A length of the field is 6 bits.

X: The field is referred to as a bit rate multiplier. For UE that supports a recommended bit rate multiplier, when a logical channel indicated by the LCID field is configured with an information element bitRateMultiplier, the X field is set to "1", indicating that an actual value of the bit rate is obtained by multiplying an index indicated by the bit rate field and a value corresponding to bitRateMultiplier.

R: The field is referred to as a reserved bit, which is set to 0.

When the UE receives an RBR MAC CE, the UE may determine, based on an identity of an LCID in a MAC subheader corresponding to the RBR MAC CE, whether content in the RBR MAC CE corresponds to information about the recommended bit rate. That is, the UE may determine, based on an LCID field value in the MAC subheader corresponding to the RBR MAC CE, the content in the RBR MAC CE corresponds to the information about the bit rate recommendation. For example, in the structure of the MAC subheader shown in (a) in FIG. 6, it may be specified that LCID = 47 corresponds to a bit rate recommended message sent by a base station to the UE, and LCID = 53 corresponds to a bit rate recommended query message sent by the UE to the base station.

In a U2N relay communication scenario, because there is no end-to-end MAC entity between remote UE and an access network device (a base station is used as an example below), how the base station sends control information (for example, information about bit rate recommendation) to the remote UE, or how the remote UE sends control information (for example, information about a recommended bit rate query) to the base station is a technical problem that needs to be urgently resolved.

For example, in a U2N relay scenario, an RBR MAC CE sent by the base station to the remote UE needs to be forwarded to the remote UE by using relay UE. If the conventional technology is followed, after the RBR MAC CE is sent to the relay UE, the relay UE cannot distinguish whether the RBR MAC CE is a MAC CE sent by the base station to the relay UE or a MAC CE that needs to be forwarded to the remote UE. In addition, if the relay UE is connected to a plurality of remote UEs, the relay UE cannot determine to which remote UE the RBR MAC CE received from the base station belongs.

In addition, a recommended bit rate query MAC CE that is sent by the remote UE to the base station needs to be forwarded by using the relay UE. However, how to send related control information of a corresponding recommended bit rate on a sidelink is also a problem that needs to be resolved. Therefore, the remote UE cannot determine how to upload the information about the recommended bit rate query.

In view of this, the technical solutions provided in embodiments of this application are dedicated to implementing the bit rate recommendation and recommended bit rate query before the base station and the remote UE in the U2N relay communication scenario, to resolve the foregoing technical problem in the conventional technology. According to embodiments of this application, in the downlink direction, the base station may correctly forward the information about the bit rate recommendation to the target remote UE by using a relay forwarding function of the relay UE; and in the uplink direction, the information about the recommended bit rate query of the remote UE may also be correctly forwarded by the relay UE to the base station.

The following describes the technical solutions in embodiments of this application with reference to accompanying drawings in embodiments of this application. In the descriptions of this application, "/" represents an "or" relationship between associated objects unless otherwise specified. For example, A/B may represent A or B. The term "and/or" in this application indicates only an association relationship for describing associated objects and indicates that three relationships may exist. For example, A and/or B may indicate the following three cases: Only A exists, both A and B exist, and only B exists, where A and B may be singular or plural. Moreover, in the descriptions of this application, unless otherwise specified, "a plurality of' means two or more than two. "At least one of the following items (piece)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. It may be further understood that the terms "first" and "second" are generally applied to a same embodiment or a same technical solution in embodiments, and the terms "first" and "second" in different independent solutions may not have a same or reference relationship with each other. That is, meanings of the terms modified by "first" and "second" depend on substantive meanings of the terms in the overall technical solution. In addition, the term such as "example" or "for example" in embodiments of this application is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

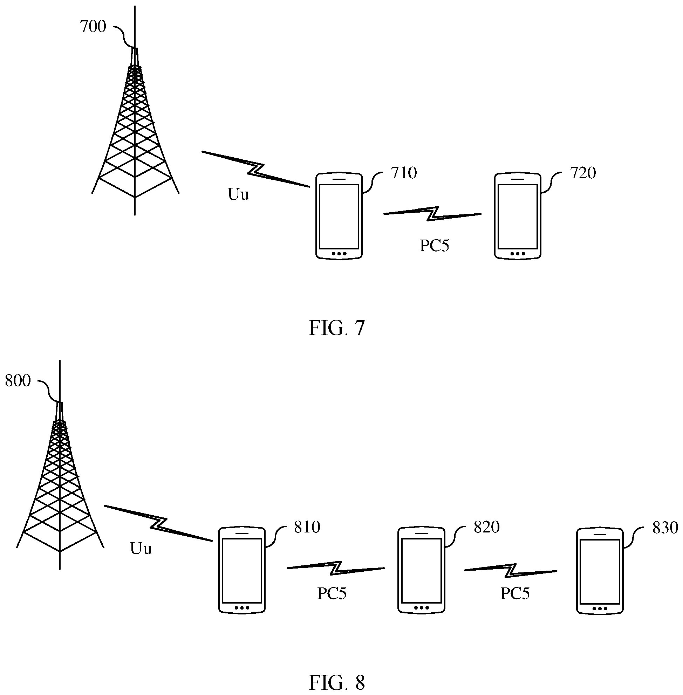

FIG. 7 is a schematic diagram of a communication network applicable to a communication method according to this application. The communication network may include a radio access network device 700, a first terminal device 710, and a second terminal device 720. The first terminal device 710 provides a relay service for the second terminal device 720. The radio access network device 700 communicates with the first terminal device 710 through a Uu interface, and the first terminal device 710 communicates with the second terminal device 720 through a PC5 interface. The second terminal device 720 may establish a connection to the radio access network device 700 by using the first terminal device 710, and may perform data transmission. In the network shown in FIG. 7, the first terminal device 710 may be considered as relay UE, the second terminal device 720 may be considered as remote UE, and the radio access network device 700 may be a base station.

FIG. 8 is a schematic diagram of another communication network applicable to a communication method according to this application. The communication network may include a radio access network device 800, a first terminal device 810, a second terminal device 820, and a third terminal device 830. The first terminal device 810 and the second terminal device 820 provide a relay service for the third terminal device 830. The radio access network device 800 communicates with the first terminal device 810 through a Uu interface, the first terminal device 810 communicates with the second terminal device 820 through a PC5 interface, and the second terminal device 820 communicates with the third terminal device 830 through a PC5 interface. The third terminal device 830 may establish a communication connection to the radio access network device 800 by using the second terminal device 820 and the first terminal device 810, and perform data transmission. In the network shown in FIG. 8, the first terminal device 810 and the second terminal device 820 may be considered as relay UEs, the third terminal device 830 may be considered as remote UE, and the radio access network device 800 may be a base station. The communication network shown in FIG. 8 may be referred to as a U2N relay multi-hop scenario.

It should be understood that, in FIG. 7, an example in which the communication network includes one access network device and two terminal devices is used, and in FIG. 8, an example in which the communication network includes one access network device and three terminal devices is used. Certainly, the communication network may also include other quantities of access network devices and terminal devices. FIG. 7 and FIG. 8 are merely schematic diagrams, and do not constitute any limitation on an applicable scenario of the communication method in embodiments of this application.

A terminal device in embodiments of this application, also referred to as user equipment (user equipment, UE), a mobile station (mobile station, MS), a mobile terminal (mobile terminal, MT), or the like, is a device that provides a communication function such as voice/data/signaling for a user, for example, a handheld device or an in-vehicle device that has a wireless connection function. The terminal device may be specifically: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), an in-vehicle intelligent terminal, an in-vehicle communication apparatus, an in-vehicle communication chip, a roadside unit (Roadside Unit, RSU) in a V2X system, a system chip in an RSU, a terminal device in a 5G communication network or a communication network after 5G, or the like. This is not limited in embodiments of this application.

The access network device in embodiments of this application may be a radio access network device in a wireless communication network, for example, a radio access network (radio access network, RAN) node that connects the terminal device to the wireless communication network. Currently, for example, some RAN nodes are: a generation NodeB (generation NodeB, gNB), a transmission reception point (transmission reception point, TRP), an evolved NodeB (evolved NodeB, eNB), a home base station (for example, a home evolved NodeB, or a home NodeB, HNB), a base band unit (base band unit, BBU), or a wireless fidelity (wireless fidelity, Wi-Fi) access point (access point, AP). Alternatively, the RAN node is a network side device that is configured to provide a wireless communication function for a terminal device in a 5G communication network or another communication network after 5G.

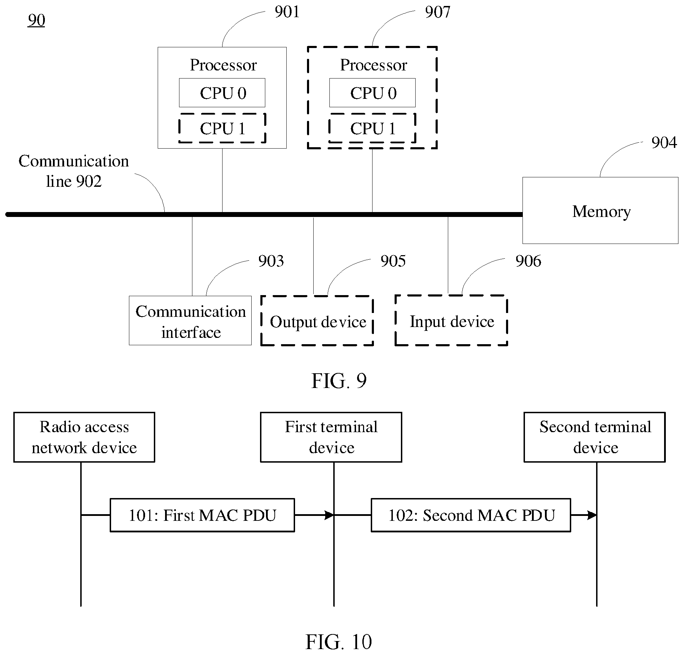

It should be noted that the devices shown in FIG. 7 and FIG. 8, such as the terminal devices (including the first terminal device, the second terminal device, and the third terminal device) and the radio access network device, may use a composition structure shown in FIG. 9 or include components shown in FIG. 9. FIG. 9 is a schematic diagram of a structure of a communication apparatus 90 according to an embodiment of this application. For example, when the communication apparatus 90 has a function of the radio access network device in embodiments of this application, the communication apparatus 90 may be a radio access network device, or a chip or a chip system in the access network device. When the communication apparatus 90 has a function of the terminal device in embodiments of this application, the communication apparatus 90 may be a terminal device, or a chip or a chip system in the terminal device.

As shown in FIG. 9, the communication apparatus 90 may include a processor 901, a communication line 902, and a communication interface 903. The communication apparatus 90 may further include a memory 904. The processor 901, the memory 904, and the communication interface 903 may be connected to each other through the communication line 902.

The processor 901 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 901 may alternatively be another apparatus having a processing function, for example, a circuit, a component, or a software module.

The communication line 902 is configured to transmit information between the components included in the communication apparatus 90.

The communication interface 903 is configured to communicate with another device or another communication network. The another communication network may be an Ethernet, a radio access network (radio access network, RAN), a wireless local area network (wireless local area network, WLAN), or the like. The communication interface 903 may be a radio frequency module, an interface circuit, or any apparatus that can implement communication. In this embodiment of this application, an example in which the communication interface 903 is a radio frequency module is used for description. The radio frequency module may include an antenna, a radio frequency circuit, and the like. The radio frequency circuit may include a radio frequency integrated chip, a power amplifier, and the like.

The memory 904 is configured to store a computer program. The computer program may include a series of computer instructions.

The memory 904 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, optical disc storage, a magnetic disk storage medium or another magnetic storage device. The optical disc storage includes a compact disc, a laser disc, an optical disc, a digital versatile disc, a Blu-ray disc, and the like.

It should be noted that the memory 904 may exist independently of the processor 901, or may be integrated with the processor 901. The memory 904 may be configured to store computer instructions, program code, data required for performing the method in embodiments of this application, or the like. The memory 904 may be located inside the communication apparatus 90, or may be located outside the communication apparatus 90. This is not limited in this embodiment of this application.

The processor 901 is configured to execute the instructions stored in the memory 904, to implement the communication method provided in the following embodiments of this application.

Alternatively, optionally, in this embodiment of this application, the processor 901 may perform processing-related functions in the communication method provided in the following embodiments of this application, and the communication interface 903 is responsible for communicating with another device or a communication network. This is not specifically limited in this embodiment of this application.

Optionally, the computer instructions in this embodiment of this application may also be referred to as application program code. This is not specifically limited in this embodiment of this application.

In an example, the processor 901 may include one or more CPUs, for example, a CPU 0 and a CPU 1 in FIG. 9.

In an optional implementation, the communication apparatus 90 includes a plurality of processors. For example, in addition to the processor 901 in FIG. 9, the communication apparatus 90 may further include a processor 907. The processor 907 may further include one or more CPUs, for example, a CPU 0 and a CPU 1 in FIG. 9.

In an optional implementation, the communication apparatus 90 may further include an output device 905 and an input device 906. For example, the input device 906 is a device, such as a keyboard, a mouse, a microphone, or a joystick, and the output device 905 is a device, such as a display, or a speaker (speaker).

It should be noted that the communication apparatus 90 may be a desktop computer, a portable computer, a network server, a mobile phone, a tablet computer, a wireless user equipment, an embedded device, a chip system, a communication base station, or another device having a structure similar to that in FIG. 9. In addition, the composition structure shown in FIG. 9 does not constitute a limitation on the communication apparatus. In addition to the components shown in FIG. 9, the communication apparatus may include more or fewer components than those shown in the figure, or combine some components, or have different component arrangements.

In this embodiment of this application, the chip system may include a chip, or may include a chip and another discrete device.

With reference to communication systems shown in FIG. 7 and FIG. 8, the following describes the communication method provided in embodiments of this application. Each device in the following embodiments may have the components shown in FIG. 9. For operations, terms, and the like in embodiments of this application, refer to each other. This is not limited. In embodiments of this application, a name of a message exchanged between devices, a name of a parameter in the message, or the like is merely an example. Another name may alternatively be used during specific implementation. This is not limited.

Interaction among the first terminal device, the second terminal device, and the radio access network device in the embodiments shown in FIG. 7 or FIG. 8 is used as an example. FIG. 10 is a schematic flowchart of a communication method according to an embodiment of this application. As shown in FIG. 10, the first terminal device is relay UE, the second terminal device is remote UE, and the radio access network device may be a communication base station gNB. For example, the base station indicates a recommended bit rate in a downlink. The method may include the following steps.

101: The radio access network device sends a first MAC PDU to the first terminal device through a Uu interface.

The first MAC PDU includes first information that identifies the second terminal device, that is, the remote UE and control information.

The radio access network device may generate the first MAC PDU. The radio access network device communicates with the first terminal device through the Uu interface, and sends the first MAC PDU to the first terminal device through a communication link of the Uu interface.

For example, the first MAC PDU includes a first MAC CE, and the first MAC CE includes the first information that identifies the second terminal device. The first information that identifies the second terminal device may include: a cell radio network temporary identifier (cell radio network temporary identifier, C-RNTI) of the second terminal device, and/or identity information allocated by the first terminal device or the radio access network device to the second terminal device, for example, a local identity local ID allocated by the radio access network device or the first terminal device to the second terminal device. Alternatively, the first information that identifies the second terminal device may be an identity allocated by the second terminal device to the second terminal device.

For example, the control information may include information about a recommended bit rate, or the control information may be a MAC CE bearing the information about the recommended bit rate, for example, an RBR MAC CE. It may be understood that the control information may alternatively be another type of control information. For example, in a downlink direction that is presented by sending by a radio access device to the remote UE by using the relay UE, the control information may be one or more of a DRX Command MAC CE, a Timing Advance Command MAC CE, and a Contention Resolution Identity MAC CE. In an uplink direction that is presented by sending by the remote UE to a radio access network by using the relay UE, the control information may be one or more of a Buffer Status Report MAC CE, a Power Headroom MAC CE, and a C-RNTI MAC CE. This is not limited in this embodiment of this application. Functions of the MAC CEs that are specifically involved are as follows.

DRX Command MAC CE: The MAC CE may be sent by a base station to UE, and is used to put the UE into a DRX cycle to reduce power of the UE.

Timing Advance Command MAC CE: The MAC CE may be sent by a base station to UE, and notifies the UE of a time adjustment amount that needs to apply for uplink timing calibration.

Contention Resolution Identity MAC CE: The MAC CE is sent by a base station to UE, and is used for contention resolution in an RA process.

Buffer Status Report MAC CE: An accumulated data amount in a buffer of UE is sent from the UE to a base station by using the MAC CE. Three LCID values may be used to distinguish a short BSR, a long BSR, and a truncated BSR.

Power Headroom MAC CE: UE reports information about available power headroom to an eNB by using the MAC CE.

C-RNTI MAC CE: The MAC CE is reported by UE to a base station and includes a C-RNTI of the UE for contention resolution in a random access RA process.

102: The first terminal device sends a second MAC PDU to the second terminal device through a sidelink of a PC5 interface.

The second MAC PDU includes second information, and the second information indicates that the second MAC PDU includes the control information.

For example, the relay UE determines that the control information is sent to the remote UE, that is, the second terminal device based on the first information that is in the received first MAC PDU and that identifies the second terminal device.

The second terminal device receives and parses the second MAC PDU through a sidelink between the second terminal device and the first terminal device, to obtain information carried in the second MAC PDU.

For example, the second MAC PDU includes a second MAC subheader and a second MAC CE, the second MAC subheader includes the second information, and the second information indicates that the second MAC CE includes the control information. The second information may be a logical channel identity field value (for example, an LCID field value).

In the MAC PDU structure shown in the foregoing steps 101 and 102, the first MAC CE and/or the second MAC CE may include third information, and the third information indicates identity information of a logical channel corresponding to the control information or identity information of a radio bearer corresponding to the control information, for example, a logical channel ID (logical channel ID, LCID) or a data radio bearer ID (Data Radio Bearer ID, DRB ID). In other words, the third information may include the logical channel ID (logical channel ID, LCID) and/or the data radio bearer ID (Data Radio Bearer ID, DRB ID).

It may be understood that the MAC PDU shown in the foregoing steps 101 and 102 may be a MAC sub PDU. Unless otherwise specified, the MAC PDU in embodiments of this application may be a MAC sub PDU.

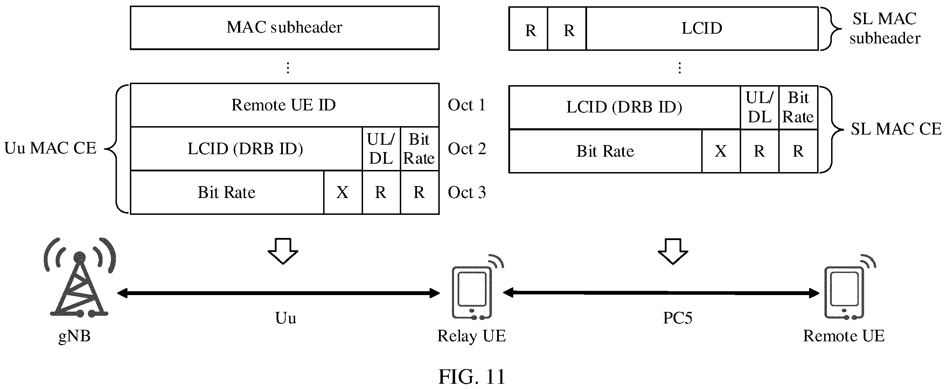

Based on the network architecture shown in FIG. 7 or FIG. 8 and the communication method shown in FIG. 10, FIG. 11 is a schematic diagram of a communication method based on a MAC PDU structure according to an embodiment of this application. For example, a main idea of the communication method includes the following. A base station adds identity information Remote UE ID of remote UE to an existing Uu MAC CE, and sends the Uu MAC CE to relay UE. After receiving the Uu MAC CE, the relay UE sends corresponding control information to the remote UE on a sidelink. Herein, a format of a new Uu MAC PDU (including a MAC CE transmitted on a Uu interface, which is referred to as a Uu MAC CE in this specification) and a format of a new SL MAC PDU (including an SL MAC CE transmitted on a PC5 interface, which is referred to as an SL MAC CE in this specification) are involved. The following is described in detail mainly by using a process of bit rate recommendation in a downlink direction as an example. For example, the first MAC PDU in FIG. 10 corresponds to the Uu MAC PDU including the Uu MAC CE in FIG. 11, and the second MAC PDU corresponds to the SL MAC PDU including the SL MAC CE in FIG. 11.

First, a base station gNB sends the Uu MAC CE to relay UE in the downlink direction through a Uu interface. Based on an existing RBR MAC CE, the base station may add, to the Uu MAC CE, a field that indicates remote UE identity remote UE ID, to indicate remote UE under the relay UE to which information bore in the RBR MAC CE is sent. The remote UE ID may be a C-RNTI, or may be a local ID allocated by the base station or the relay UE to the remote UE. A length of the remote UE ID determines a size of the field. For example, in the Uu MAC CE shown in FIG. 11, if a length of the remote UE ID is 8 bits, the field occupies one Oct. It should be noted that a sequence of a newly added remote UE ID field and remaining two existing Octs is not limited. For descriptions of other fields such as a MAC subheader (MAC subheader) corresponding to the RBR MAC CE, refer to FIG. 6 and the descriptions thereof. Details are not described herein again.

Then, after receiving the Uu MAC CE, the relay UE parses out content in the Uu MAC CE, and forwards all or some content obtained through parsing to the corresponding remote UE by using the SL MAC CE of the PC5 interface. The content forwarded by the SL MAC CE may be content other than the remote UE ID in the Uu MAC CE, that is, information such as an LCID (or a DRB ID), a UL/DL, a bit rate, X, and an R included in the Uu MAC CE. For example, a format of the SL MAC CE is shown in FIG. 11. An SL MAC subheader (SL MAC subheader) corresponding to the SL MAC CE includes a newly defined LCID field value. A specific value of the LCID field indicates that content bore by the SL MAC CE is related control information of bit rate recommendation. For example, a range of the LCID field value may be 0 to 63, corresponding to 6 bits.

It may be understood that the logical channel identities LCIDs in the Uu MAC CE and the SL MAC CE shown in FIG. 11 correspond to an ID of a logical channel to which information about a recommended bit rate is applied or indicated. In an implementation, the logical channel identities LCIDs in the Uu MAC CE and the SL MAC CE are the same.

In addition, when the base station communicates with the UE, one radio bearer (radio bearer, RB) may correspond to one PDCP entity, and corresponds to one logical channel. Therefore, a logical channel in a direction indicated by the RBR MAC CE also corresponds to a specific radio bearer. In an L2 U2N relay protocol architecture, because that there may be an adaptation layer between the relay UE and the remote UE needs to be further considered, a plurality of bearers of the remote UE may be multiplexed for one logical channel on a sidelink. Therefore, to more accurately indicate the recommended bit rate, as shown in FIG. 11, the LCID fields in the Uu MAC CE and the SL MAC CE may be replaced with a field indicating a data radio bearer identity (data radio bearer ID, DRB ID) of the remote UE.

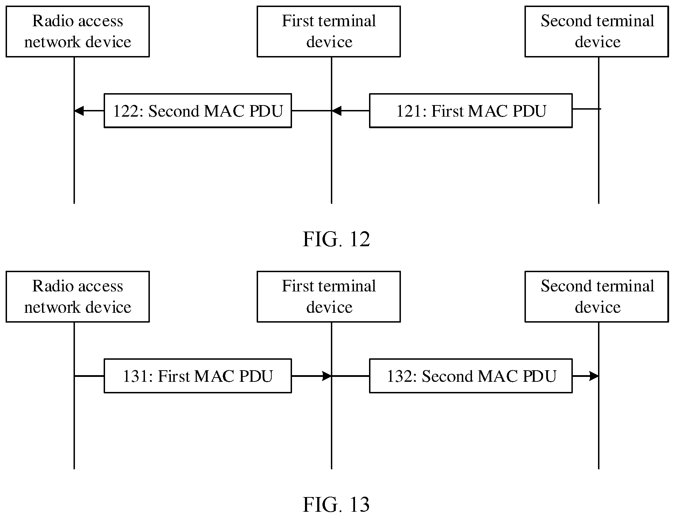

It may be understood that designs of the SL MAC PDU (including the SL MAC CE) and the Uu MAC PDU (including the Uu MAC CE) that are used for the recommended bit rate are also applicable to an uplink direction. That is, the remote UE may send RBR query information to the base station by using the SL MAC CE in the foregoing format and the Uu MAC CE in the foregoing format. Specifically, the relay UE receives the RBR query information of the remote UE by using the SL MAC PDU in the foregoing format, and then adds remote UE ID information to the Uu MAC CE when forwarding the RBR query information on a Uu link, so that the base station can learn which remote UE the Uu MAC CE is from. For a recommended bit rate uplink query scenario, as shown in FIG. 12, an embodiment of this application further provides a communication method. For example, a first MAC PDU in FIG. 12 corresponds to the SL MAC PDU including the SL MAC CE in FIG. 11, and a second MAC PDU in FIG. 12 corresponds to the Uu MAC PDU including the Uu MAC CE in FIG. 11. A first terminal device is relay UE, a second terminal device is remote UE, a radio access network device may be a communication base station gNB, and the method includes the following steps.

121: The first terminal device receives, through a sidelink of a PC5 interface, the first MAC PDU sent by the second terminal device.

The first MAC PDU includes first information, and the first information indicates that the first MAC PDU includes control information. For example, the first MAC PDU includes a first MAC subheader and a first MAC CE, the first MAC subheader includes the first information, and the first information indicates that the first MAC CE includes the control information. The first information may include a logical channel identity field value.

For example, the control information includes information about a recommended bit rate, or may be other control information. For specific control information, refer to descriptions of the control information in the embodiment corresponding to FIG. 10. Details are not described herein again.

122: The first terminal device sends the second MAC PDU to the radio access network device through a Uu interface.

The radio access network device receives the second MAC PDU and parses the second MAC PDU. The second MAC PDU includes second information that identifies the second terminal device and the control information. For example, the second MAC PDU includes a second MAC CE, and the second MAC CE includes the second information that identifies the second terminal device.

For example, the second information that identifies the second terminal device may include: a cell radio network temporary identifier C-RNTI of the second terminal device, and/or identity information allocated by the first terminal device or the radio access network device to the second terminal device.

The first terminal device may determine, based on a sidelink for receiving the first MAC PDU, remote UE from which the first MAC PDU is received, to determine the second information that identifies the second terminal device, and determine to send the second MAC PDU to the radio access network device. The radio access network device may also determine, based on the second information, an RBR MAC CE received from which remote UE.

It may be understood that, in steps 121 and 122, the first MAC CE and/or the second MAC CE include/includes third information, and the third information indicates identity information of a logical channel corresponding to the control information and/or identity information of a radio bearer corresponding to the control information, for example, an LCID and/or a DRB ID.

According to the communication method provided in the foregoing embodiments of this application, remote UE ID may be added to an RBR MAC CE of an existing Uu communication interface, so that relay UE (a downlink RBR MAC CE receiver) or a base station (an uplink RBR MAC CE receiver) can identify target remote UE. In addition, a format of an RBR MAC CE on a corresponding SL is defined, so that the relay UE can forward content in the RBR MAC CE delivered by the base station to corresponding remote UE, or the remote UE can send, to the relay UE, a MAC CE bearing RBR query information, and forward the MAC CE to the base station by using the relay UE in a relay mode. Different from the conventional technology, in this embodiment, the Uu MAC CE carries the remote UE ID, which identifies and forwards the relay UE. In addition, in this embodiment, a new SL MAC CE is further defined for an RBR to bear content of a corresponding Uu MAC CE. Therefore, the base station and the remote UE can correctly perform RBR indication and query by using the foregoing process.

Interaction among the first terminal device, the second terminal device, and the radio access network device in embodiments shown in FIG. 7 or FIG. 8 is used as an example. FIG. 13 is a schematic flowchart of a communication method according to an embodiment of this application. As shown in FIG. 13, the first terminal device is relay UE, the second terminal device is remote UE, and the radio access network device may be a base station. For example, the base station indicates a recommended bit rate in a downlink. The method may include the following steps.

131: The radio access network device sends a first MAC PDU to a first terminal device through a Uu interface.

The first MAC PDU includes first indication information. The first indication information indicates that the first MAC PDU includes: first information that identifies the second terminal device, second information, and control information. The second information indicates that the first MAC PDU includes the control information. Specifically, for example, the first MAC PDU includes a first MAC subheader and a first MAC CE. The first MAC subheader includes the first indication information, and the first MAC CE includes: the first information that identifies the second terminal device, the second information, and the control information.

The radio access network device may generate the first MAC PDU. The radio access network device communicates with the first terminal device through the Uu interface, and sends the first MAC PDU to the first terminal device through a communication link of the Uu interface.

For example, the first indication information includes a logical channel identity field value that identifies a MAC CE type on the Uu interface.

The control information includes information about a recommended bit rate. For example, the control information may include the information about the recommended bit rate, or the control information may be a MAC CE bearing the information about the recommended bit rate, for example, an RBR MAC CE. It may be understood that the control information may alternatively be another type of control information. For specific control information, refer to descriptions of the control information in the embodiment corresponding to FIG. 10. Details are not described herein again.

The first information that identifies the second terminal device may include: a cell radio network temporary identifier C-RNTI of the second terminal device, and/or identity information allocated by the first terminal device or the radio access network device to the second terminal device. Alternatively, the first information that identifies the second terminal device may be an identity allocated by the second terminal device to the second terminal device.

132: The first terminal device sends a second MAC PDU to the second terminal device through a PC5 interface.

For example, after receiving the first MAC PDU sent by the radio access network device, the first terminal device determines to send the second MAC PDU to the second terminal device through a sidelink of the PC5 interface based on the first information that is carried in the first MAC PDU and that identifies the second terminal device.

The second MAC PDU includes second indication information. The second indication information indicates that the second MAC PDU includes: the second information and the control information, and the second information indicates that the second MAC PDU includes the control information. For example, the second MAC PDU includes a second MAC subheader and a second MAC CE. The second MAC subheader includes the second indication information, and the second MAC CE includes: the second information and the control information.

For example, the second indication information includes a logical channel identity field value that identifies a MAC CE type on the PC5 interface.

The second terminal device receives and parses the second MAC PDU through a sidelink between the second terminal device and the first terminal device, to obtain information carried in the second MAC PDU.

In the MAC PDU structure shown in the foregoing steps 131 and 132, the first MAC CE and/or the second MAC CE may include third information, and the third information indicates identity information of a logical channel corresponding to the control information or identity information of a radio bearer corresponding to the control information, for example, an LCID field value and/or a DRB ID corresponding to the control information.

It may be understood that the MAC PDU shown in the foregoing steps 131 and 132 may be a MAC sub PDU.

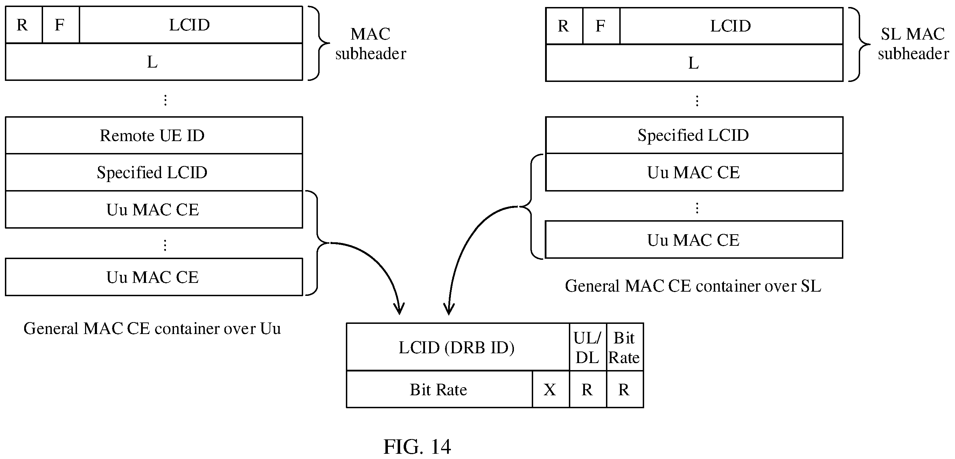

Based on the network architecture shown in FIG. 7 or FIG. 8 and the communication method shown in FIG. 13, FIG. 14 is a schematic diagram of a communication method based on a MAC PDU structure according to an embodiment of this application. For example, a main idea of the communication method includes the following. A structure of a general MAC CE container or a corresponding MAC PDU (including a MAC CE and a MAC subheader) on a Uu interface and a PC5 interface is defined to bear information about bit rate recommendation in an existing Uu MAC CE. A structure of a general MAC CE container or a MAC PDU on a Uu interface link and a PC5 interface link is shown in FIG. 14. A general Uu MAC CE container on the Uu link includes two parts: a MAC subheader (MAC subheader) and a MAC CE. A structure of the MAC subheader may be the same as a structure of a MAC subheader with a variable length in the conventional technology. The MAC subheader includes four parts: R, F, LCID, and L. For example, meanings of the parts are as follows.

R: The field is referred to as a reserved bit, which may be set to 0.

L: The field indicates a length of a corresponding MAC CE with a variable length, and is in a unit of byte. A length of an L field may be indicated by a field L.

F: The field indicates a size of a length field L. For example, F = 0 indicates that the length of the L field is 8 bits, and F = 1 indicates that the length of the L field is 16 bits.

LCID: The field is referred to as a logical channel identity LCID field value and represents a type of a corresponding MAC CE or indicates a structure of a corresponding MAC CE. The general MAC CE container provided in this embodiment is a newly defined MAC CE and a structure thereof. In a MAC subheader corresponding to the newly defined MAC CE, an LCID field value corresponding to the MAC subheader is defined to indicate that the MAC CE is the general MAC CE container described in this embodiment. It may be understood that, in this embodiment, a Uu interface general MAC CE container may be referred to as a general Uu MAC CE, a newly defined Uu MAC CE, or a Uu MAC CE.

As shown in FIG. 14, the general Uu MAC CE includes three parts: a remote UE identity (Remote UE ID), a specified logical channel field value (specified LCID), and a Uu MAC CE. The remote UE ID may be identity information of target UE to which the general MAC CE is sent by a base station. The Uu MAC CE bears content of a MAC CE that the existing base station wants to send to the remote UE. For example, in a bit rate recommendation scenario, the Uu MAC CE field bears an RBR MAC CE. Specified LCID is an LCID field value corresponding to the RBR MAC CE (which may also be referred to as an LCID value in a MAC subheader corresponding to the original RBR MAC CE), and indicates a type of a MAC CE of a Uu MAC CE carried in the current general Uu MAC CE, or may indicate control information carried in the general Uu MAC CE or a type thereof.

According to FIG. 14, first, after relay UE receives a general Uu MAC CE sent on a Uu link, the relay UE may forward, based on remote UE ID information carried in the general Uu MAC CE, the content bore in the general Uu MAC CE to corresponding remote UE by using a general SL MAC CE on a sidelink, or send the content bore in the general Uu MAC CE to the corresponding remote UE by using an SL MAC CE in a specified format. On a sidelink SL, a structure of a general SL MAC CE container sent by the relay UE to the remote UE may be shown in FIG. 14. The SL MAC CE container includes two parts: an SL MAC subheader and an SL MAC CE. The SL MAC subheader may use a structure of a MAC subheader corresponding to an existing SL MAC CE with a variable length, and is the same as a structure of a MAC subheader corresponding to a general Uu MAC CE on a Uu link. An LCID identity carried in the SL MAC subheader is a specific value of the LCID field defined for the general SL MAC CE. The general SL MAC CE further includes two parts: a specified LCID and a Uu MAC CE. Content of fields of the two parts is the same as corresponding content in the general MAC CE. That is, the general SL MAC CE forwards control signaling content carried in the general Uu MAC CE, and specific forwarded parts are the two parts: the specified LCID and the Uu MAC CE carried in the general Uu MAC CE. It may be understood that, in this embodiment, the SL MAC CE container may be referred to as a general SL MAC CE, a newly defined SL MAC CE, or an SL MAC CE.

In this embodiment, the foregoing mainly describes a manner in which the base station sends the MAC CE to the remote UE and a MAC CE format that is used in the downlink direction.

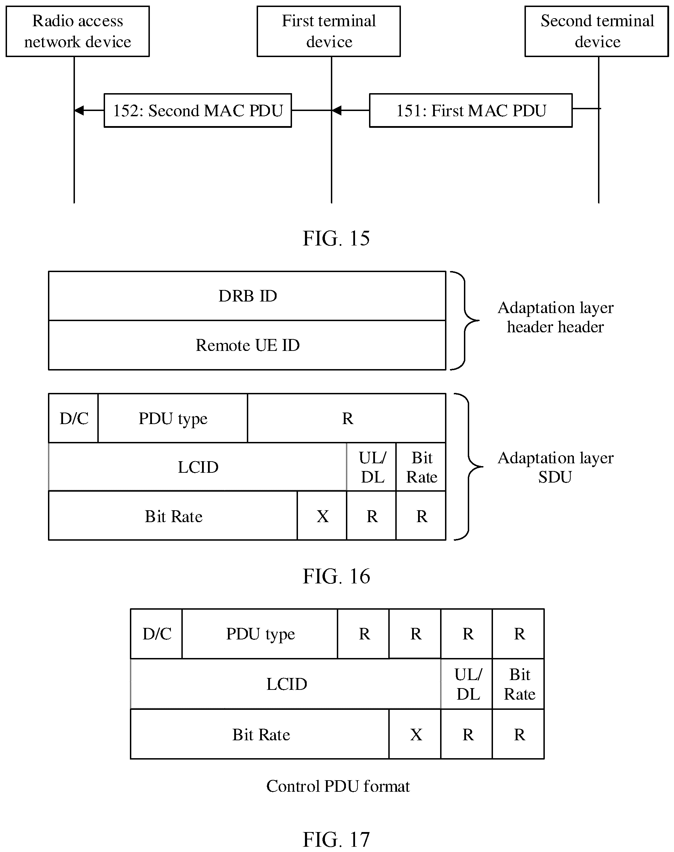

In an uplink direction, a method for sending the MAC CE by the remote UE to the base station is similar, and a structure of an applied general MAC CE container is also the same. It may be understood that designs of the Uu MAC PDU (including the Uu MAC CE) and the SL MAC PDU (including the SL MAC CE) that are used for a recommended bit rate are also applicable to an uplink direction. That is, the remote UE may send RBR query information to the base station by using the SL MAC CE in the foregoing format and the Uu MAC CE in the foregoing format. Specifically, the relay UE receives the RBR query information of the remote UE by using the SL MAC PDU in the format shown in FIG. 14, and then adds the remote UE ID information to the Uu MAC CE when forwarding the RBR query information on the Uu link, so that the base station can learn which remote UE the Uu MAC CE is from. For a recommended bit rate uplink query scenario, as shown in FIG. 15, an embodiment of this application further provides a communication method. For example, a first MAC PDU in FIG. 15 corresponds to the SL MAC PDU including the SL MAC CE in FIG. 14, and a second MAC PDU in FIG. 15 corresponds to the Uu MAC PDU including the Uu MAC CE in FIG. 14. A first terminal device is relay UE, a second terminal device is remote UE, a radio access network device may be a communication base station gNB, and the method includes the following steps.

151: The first terminal device receives, through a sidelink of a PC5 interface, the first MAC PDU sent by the second terminal device.

The first MAC PDU includes first indication information. The first indication information indicates that the first MAC PDU includes: first information and control information, and the first information indicates that the first MAC PDU includes the control information. Specifically, for example, the first MAC PDU includes a first MAC subheader and a first MAC CE. The first MAC subheader includes the first indication information, and the first MAC CE includes: the first information and the control information.

For example, the first indication information includes a logical channel identity field value that identifies a MAC CE type on the PC5 interface.

For example, the control information includes information about a recommended bit rate, or may be other control information. For specific control information, refer to descriptions of the control information in the embodiment corresponding to FIG. 10. Details are not described herein again.

152: The first terminal device sends the second MAC PDU to the radio access network device through a Uu interface.

The second MAC PDU includes second indication information. The second indication information indicates that the second MAC PDU includes: second information that identifies the second terminal device, the first information, and the control information. The first information indicates that the second MAC PDU includes the control information. Specifically, for example, the second MAC PDU includes a second MAC subheader and a second MAC CE. The second MAC subheader includes the second indication information, and the second MAC CE includes: the second information that identifies the second terminal device, the first information, and the control information.

For example, the second indication information includes a logical channel identity field value that identifies a MAC CE type on the Uu interface.

The second information that identifies the second terminal device may include: a cell radio network temporary identifier C-RNTI of the second terminal device, and/or identity information allocated by the first terminal device or the radio access network device to the second terminal device. The first terminal device may determine, based on a sidelink for receiving the first MAC PDU, remote UE from which the first MAC PDU is received, to determine the second information that identifies the second terminal device, and determine to send the second MAC PDU to the radio access network device.

The radio access network device communicates with the first terminal device through the Uu interface. There is a sidelink between the first terminal device and the second terminal device. The radio access network device receives the second MAC PDU through the Uu interface, and may determine, based on the obtained second information that identifies the second terminal device, a remote device from which the received information about a bit rate query is from.

It may be understood that, in steps 151 and 152, the first MAC CE and/or the second MAC CE include/includes third information, and the third information indicates identity information of a logical channel corresponding to the control information and/or identity information of a radio bearer corresponding to the control information, for example, an LCID and/or a DRB ID.

Different from the conventional technology, in this embodiment of this application, the MAC CE, that is, a general MAC CE container referred to in this specification, is defined on a Uu link and a sidelink, and is used to bear control signaling content of the existing Uu MAC CE.

Particularly, the method in this embodiment is implemented, so that good forward compatibility is achieved. For example, for a Uu MAC CE other than an RBR MAC CE, only corresponding MAC CE content needs to be bore (or a Uu MAC CE field needs to be replaced) on a Uu MAC CE field of a general MAC CE (a general Uu MAC CE or a general SL MAC CE), so that MAC CE signaling interaction between the base station and the remote UE can be successfully performed without modifying a structure of the existing Uu MAC CE.

In this embodiment, interaction of the RBR MAC CE between the remote UE and the base station can be implemented by using a general MAC CE container defined on the Uu link and the sidelink.

Interaction among the first terminal device (Relay UE), the second terminal device (Remote UE), and the radio access network device (base station) in embodiments shown in FIG. 7 or FIG. 8 is used as an example. An embodiment of this application further provides a communication method, to help resolve a problem that in a U2N relay communication scenario, because there is no MAC entity for end-to-end communication between remote UE and an access network device (a base station is used as an example below), it is difficult to effectively exchange control information (for example, information about bit rate recommendation and information about a recommended bit rate query) between the base station and the remote UE. For example, a main idea of the method includes the following. The information about the bit rate recommendation or the information about the bit rate query is bore by using an adaptation layer control PDU (Adaptation Layer control PDU, AL control PDU), so that the relay UE correctly forwards related control information of the bit rate recommendation between the base station and the remote UE.

FIG. 16 is a schematic diagram of an adaptation layer control PDU according to an embodiment of this application. FIG. 16 shows an implementation form of an adaptation layer control PDU that bears information about bit rate recommendation. The adaptation layer PDU includes two parts: an adaptation layer header (header) and an adaptation layer SDU. The adaptation layer header includes a data radio bearer identity DRB ID and a remote UE identity (Remote UE ID). The two pieces of information indicate a DRB of remote UE to which the PDU belongs. The adaptation layer SDU part includes data/control D/C indication, protocol data unit type PDU type, R, and information about a recommended bit rate (LCID, UL/DL, Bit Rate, X). D/C indicates whether the PDU belongs to a data PDU or a control PDU, and a length is 1. For example, if a value is 1, it indicates a data PDU, and if a value is 0, it indicates a control PDU. A PDU type field indicates a type of the control PDU. For example, in this embodiment, the PDU type indication is the information about the recommended bit rate. R is a reserved bit. Other than D/C, neither the PDU type nor the length of R is limited, and the structure shown in FIG. 16 is merely used as an example. For descriptions of fields in another part in FIG. 16, refer to descriptions in FIG. 6.

Related control information of the recommended bit rate in the adaptation layer SDU shown in FIG. 16 may be the same as that in an existing RBR MAC CE. In addition, because a DRB ID field in the adaptation layer header may indicate a bearer of remote UE corresponding to the recommended bit rate, the LCID field may be omitted.

After a base station sends the information about the recommended bit rate to relay UE by using the adaptation layer control PDU, the relay UE determines a target remote UE ID of the control information and a corresponding DRB based on the DRB ID and the remote UE ID that are in the adaptation layer header, and then forwards the information about the recommended bit rate bore in the relay UE to the remote UE. If there is no adaptation layer of a PC5 interface between the relay UE and the remote UE, the relay UE may forward the information about the recommended bit rate in a form of the SL MAC CE to the remote UE (as described in the foregoing embodiment). If there is a PC5 adaptation layer between the relay UE and the remote UE, the relay UE may send the information about the recommended bit rate by using an SL adaptation layer control PDU of a PC interface to the remote UE. In this case, the relay UE may remove remote UE ID information from the adaptation layer control PDU, retain only DRB ID information, and then send the information about the recommended bit rate to a corresponding target remote UE by using the SL. The foregoing mainly uses a downlink direction as an example for description.

In an uplink direction, there are two cases for description: with the PC5 adaptation layer and without the PC5 adaptation layer.

If there is a PC5 adaptation layer, the remote UE sends information about a recommended bit rate query to the relay UE by using the adaptation layer control PDU. The adaptation layer header carries the DRB ID. After receiving the information about the recommended bit rate query, the relay UE adds an ID of the corresponding remote UE to the control PDU, and then sends the ID to the base station by using the adaptation layer control PDU.

If there is no PC5 adaptation layer, the remote UE sends the information about the recommended bit rate query to the relay UE by using the MAC CE on the SL. After receiving the information about the recommended bit rate query, the relay UE constructs an adaptation layer control PDU, adds the ID of the remote UE and a corresponding DRB ID to a header of the adaptation layer control PDU, and sends the ID and the DRB ID to the base station.

An SDU part of the adaptation layer control PDU includes a PDU type. The PDU type indicates a control PDU type. The SDU part of the adaptation layer control PDU may further include the information about the recommended bit rate query, and the information about the recommended bit rate query may be the same as that in the existing RBR MAC CE. Likewise, because the adaptation layer header includes the DRB ID information, LCID information in the existing RBR MAC CE may be omitted in the SDU part of the adaptation layer control PDU.

Different from the conventional technology, in this embodiment, an adaptation layer control PDU used for control information of a bearer recommended bit rate is defined on a Uu link and a sidelink, to implement control information interaction between the remote UE and the base station. For example, the relay UE assists the remote UE and the base station in performing related control information interaction of bit rate recommendation.

It should be understood that, if the control information of the bearer recommended bit rate is replaced with other control information, this solution is also applicable.

Interaction among the first terminal device (Relay UE), the second terminal device (Remote UE), and the radio access network device (base station) in embodiments shown in FIG. 7 or FIG. 8 is used as an example. An embodiment of this application further provides a communication method, to help resolve a problem that in a U2N relay communication scenario, because there is no MAC entity for end-to-end communication between remote UE and an access network device (a base station is used as an example below), it is difficult to effectively exchange control information (for example, information about bit rate recommendation and information about a recommended bit rate query) between the base station and the remote UE. For example, a main idea of the method includes the following. An end-to-end PDCP control PDU and an RRC message are defined to bear related control information of a recommended bit rate, so that the remote UE and the base station perform related control information interaction of the bit rate recommendation, and the relay UE does not need to parse content of control signaling.

It can be learned from the L2 U2N relay protocol stack shown in FIG. 3 that there are two protocol stacks between the base station and the remote UE below a PDCP layer. One is located between the base station and the relay UE, and the other is located between the relay UE and the remote UE. Therefore, in the foregoing embodiments of this application, the control information interaction of the bit rate recommendation can be implemented between the base station and the remote UE only after parsing and re-forwarding by the relay UE. However, there is an end-to-end PDCP and an RRC protocol stack between the base station and the remote UE. Therefore, in this embodiment, PDCP and RRC signaling are used to implement the control information interaction of the recommended bit rate, so that the relay UE directly transparently transmits corresponding PDCP and RRC signaling without parsing.

### 1. PDCP control PDU bearer solution

FIG. 17 is a schematic diagram of a format of a control PDU according to an embodiment of this application. FIG. 17 shows content of a PDCP control PDU other than a PDCP header. Data/control D/C indicates whether the PDCP PDU is a data PDU (Data PDU) or a control PDU (control PDU). According to the conventional technology, D/C = 1 corresponds to the data PDU, and D/C = 0 corresponds to the control PDU. A PDU type (PDU type) indicates a type of the PDCP control PDU, and a length of the PDU type may be 3 bits. R is a reserved bit. Other content bears content of control information of existing bit rate recommendation. For descriptions of fields in another part, refer to descriptions in FIG. 6.

Because a PDCP entity corresponds to one bearer, in the control information of the bit rate recommendation carried in FIG. 17, an LCID field may be omitted. Because the PDCP entity corresponding to the PDCP PDU may correspond to a bearer or a logical channel indicated by the control information of the bit rate recommendation.

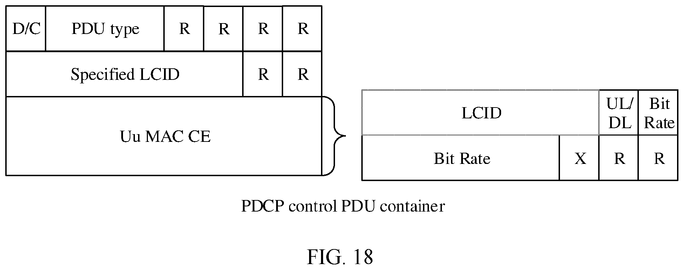

Optionally, a general PDCP control PDU container (PDCP control PDU container) may be defined to bear an RBR MAC CE. FIG. 18 is a schematic diagram of a PDCP control PDU container according to an embodiment of this application. The PDU type (PDU type) indicates that the PDCP PDU is a general PDCP control PDU container, a specified logical channel field (specified LCID) value indicates a type of a Uu MAC CE carried in the container, and the Uu MAC CE field is content of control information of an existing MAC CE. In the figure, the RBR MAC CE is used as an example. For descriptions of fields in another part, refer to descriptions in FIG. 17 and/or FIG. 6.

### 2. RRC message bearer solution

A sending priority of the PDCP control PDU depends on a priority of a logical channel corresponding to a PDCP entity. Therefore, in the foregoing PDCP control PDU bearer solution, a sending priority of an RBR MAC CE may not be ensured. Therefore, this embodiment of this application further provides a manner of bearing control information of the RBR MAC CE by using the RRC message. Because the RRC message generally has a relatively high priority, a priority of the control information of the RBR can be ensured. Based on content that needs to be carried in the control information of the RBR, the following information elements (Information Elements, IEs) are defined in this solution.

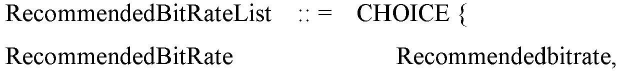

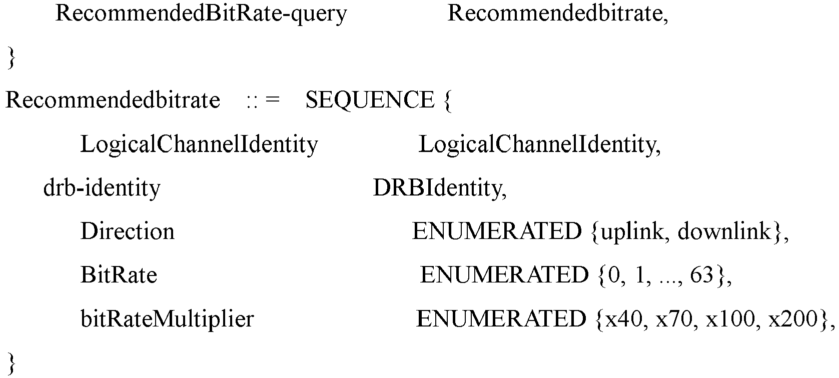

The IE RecommendedBitRateList is used to bear information about a recommended bit rate (corresponding to the IE RecommendedBitRate) or information about a recommended bit rate query (corresponding to the IE RecommendedBitRate-Query). The content carried in the IE RecommendedBitRate is the same as that carried in the IE RecommendedBitRate-Query, as shown in the IE Recommendedbitrate. LogicalChannelIdentity indicates a corresponding logical channel, or drb-identity may indicate a corresponding bearer. Direction indicates a corresponding direction, which is uplink or downlink, Bit Rate corresponds to an indicated recommended bit rate, and bitRateMultiplier indicates a multiplier factor of the recommended bit rate. In a downlink direction, the base station may bear the IE RecommendedBitRateList in an existing RRCReconfiguration RRC message, and send the IE RecommendedBitRateList to the remote UE by using the relay UE. In an uplink direction, the remote UE may use a UEAssistanceInformation RRC message or define a new RRC message to bear the foregoing IE.

Different from the conventional technology, in this embodiment, an end-to-end PDCP control PDU and an RRC message are defined for control information of a bearer recommended bit rate, so that the remote UE and the base station perform related control information interaction of the bit rate recommendation, and the relay UE does not need to parse content of control signaling.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

It should be understood that, if the control information of the bearer recommended bit rate is replaced with another type of control information, this solution is also applicable.

It should be noted that, in the foregoing method embodiment, the actions of the first terminal device may be performed by a processor 901 in a communication apparatus 90 shown in FIG. 9 by invoking application program code stored in a memory 904, to indicate the first terminal device to perform the actions. The actions of the second terminal device may be performed by the processor 901 in the communication apparatus 90 shown in FIG. 9 by invoking the application program code stored in the memory 904, to indicate the second terminal device to perform the actions. The actions of the radio access network device may be performed by the processor 901 in the communication apparatus 90 shown in FIG. 9 by invoking the application program code stored in the memory 904, to indicate the radio access network device to perform the actions. This is not limited in this embodiment.

It may be understood that, in various embodiments above, the methods and/or steps implemented by the first terminal device may also be implemented by a component (for example, a chip or a circuit) that can be used in the first terminal device. The method and/or steps implemented by the second terminal device may also be implemented by a component (for example, a chip or a circuit) that can be used in the second terminal device. The method and/or steps implemented by the radio access network device may also be implemented by a component (for example, a chip or a circuit) that can be used in the radio access network device.

The foregoing mainly describes, from a perspective of interaction between devices, the solutions provided in embodiments of this application. Correspondingly, an embodiment of this application further provides a communication apparatus, and the communication apparatus is configured to implement the foregoing methods. The communication apparatus may be the first terminal device in the foregoing method embodiments, an apparatus including the first terminal device, or a component that can be used in the first terminal device. Alternatively, the communication apparatus may be the second terminal device in the foregoing method embodiments, an apparatus including the second terminal device, or a component that can be used in the second terminal device. Alternatively, the communication apparatus may be the radio access network device in the foregoing method embodiments, an apparatus including the radio access network device, or a component that can be used in the radio access network device. It may be understood that to implement the foregoing functions, the communication apparatus includes a corresponding hardware structure and/or software module for performing each function. It should be readily appreciated by a person skilled in the art that the example units and algorithm steps described with reference to embodiments disclosed in this specification can be implemented in this application by hardware or a combination of hardware and computer software. Whether a function is performed by hardware or hardware driven by computer software depends on particular applications and design constraints of the technical solutions. A skilled person may use different methods for particular applications to implement the described functions, but this implementation should not be considered as beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods for particular applications to implement the described functions, but this implementation should not be considered as beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, device, and method may be implemented in other manners. For example, the described device embodiments are merely examples. For example, division into the units is merely logical function division and may be other division in actual implementation. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any available medium accessible by a computer, or include one or more data storage devices such as a server and a data center that can be integrated with a medium. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Terms such as "component", "module", and "system" used in this application indicate computer-related entities. The computer-related entities may be hardware, firmware, combinations of hardware and software, software, or software in running. For example, a component may be, but is not limited to, a process that is run on a processor, a processor, an object, an executable file, a thread of execution, a program, and/or a computer. As an example, both a computing device and an application that is run on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and based on, for example, a signal having one or more data packets (for example, data from one component that interacts with another component in a local system, a distributed system, and/or interacts with another system via a network such as the Internet by using a signal).

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may further be used.

In addition, the term "example" in embodiments of this application is used to represent giving an example, an illustration, or a description. Any embodiment or design solution described as an "example" in this application should not be explained as being more preferred or having more advantages than another embodiment or design solution. Specifically, the term "example" is used to present a concept in a specific manner.

In embodiments of this application, information (information), signal (signal), message (message), or channel (channel) may be interchangeably used sometimes. It should be noted that expressed meanings are consistent when differences are not emphasized. Terms "of (of)", "corresponding (corresponding, relevant)", and "corresponding (corresponding)" may be interchangeably used sometimes. It should be noted that meanings expressed by the terms are consistent when differences of the terms are not emphasized. Terms "system" and "network" may be interchangeably used sometimes. Meanings expressed by the terms are consistent when differences of the terms are not emphasized. For example, "communication network" also means "communication system".

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first terminal device, wherein the method comprises:
receiving a first MAC PDU from a radio access network device, wherein the first MAC PDU comprises first information that identifies a second terminal device and control information; and
sending a second MAC PDU to the second terminal device through a sidelink, wherein the second MAC PDU comprises second information, and the second information indicates that the second MAC PDU comprises the control information.

2. The method according to claim 1, wherein that the second MAC PDU comprises second information, and the second information indicates that the second MAC PDU comprises the control information comprises:
the second MAC PDU comprises a second MAC subheader and a second MAC CE, the second MAC subheader comprises the second information, and the second information indicates that the second MAC CE comprises the control information.

3. The method according to claim 1 or 2, wherein the control information comprises information about a recommended bit rate.

4. The method according to any one of claims 1 to 3, wherein that the first MAC PDU comprises identity information of the second terminal device comprises:
the first MAC PDU comprises a first MAC CE, and the first MAC CE comprises the first information that identifies the second terminal device.

5. The method according to any one of claims 1 to 4, wherein the second information comprises a logical channel identity field value.

6. The method according to claim 4 or 5, wherein the first MAC CE and/or the second MAC CE comprise/comprises third information, and the third information indicates identity information of a logical channel corresponding to the control information or identity information of a radio bearer corresponding to the control information.

7. The method according to any one of claims 1 to 6, wherein the first information that identifies the second terminal device comprises:
a cell radio network temporary identifier C-RNTI of the second terminal device, and/or identity information allocated by the first terminal device or the radio access network device to the second terminal device.

8. The method according to any one of claims 1 to 7, wherein the method further comprises:
determining, based on the first information that identifies the second terminal device, to send the second MAC PDU to the second terminal device through the sidelink.

9. A communication method, applied to a first terminal device and comprising:
receiving a first MAC PDU from a radio access network device, wherein the first MAC PDU comprises first indication information, the first indication information indicates that the first MAC PDU comprises: first information that identifies a second terminal device, second information, and control information, and the second information indicates that the first MAC PDU comprises the control information; and
sending a second MAC PDU to the second terminal device through a sidelink, wherein the second MAC PDU comprises second indication information, the second indication information indicates that the second MAC PDU comprises: the second information and the control information, and the second information indicates that the second MAC PDU comprises the control information.

10. The method according to claim 9, wherein the first MAC PDU comprises a first MAC subheader and a first MAC CE, the first MAC subheader comprises the first indication information, and the first MAC CE comprises: the first information that identifies the second terminal device, the second information, and the control information.

11. The method according to claim 9 or 10, wherein the second MAC PDU comprises a second MAC subheader and a second MAC CE, the second MAC subheader comprises the second indication information, and the second MAC CE comprises: the second information and the control information.

12. The method according to any one of claims 9 to 11, wherein the first indication information comprises a logical channel identity field value that identifies a MAC CE type on a Uu interface.

13. The method according to any one of claims 9 to 12, wherein the second indication information comprises a logical channel identity field value that identifies a MAC CE type on a PC5 interface.

14. The method according to any one of claims 9 to 13, wherein the control information comprises information about a recommended bit rate.

15. The method according to any one of claims 9 to 14, wherein the first MAC CE and/or the second MAC CE comprise/comprises third information, and the third information indicates identity information of a logical channel corresponding to the control information or identity information of a radio bearer corresponding to the control information.

16. The method according to any one of claims 9 to 15, wherein the first information that identifies the second terminal device comprises:
a cell radio network temporary identifier C-RNTI of the second terminal device, and/or identity information allocated by the first terminal device or the radio access network device to the second terminal device.

17. The method according to any one of claims 9 to 16, wherein the method further comprises:
determining, based on the first information that identifies the second terminal device, to send the second MAC PDU to the second terminal device through the sidelink.

18. A communication apparatus, wherein the communication apparatus comprises: a processor and a memory; and
the memory is configured to store computer-executable instructions, and when the processor executes the computer-executable instructions, the communication apparatus is enabled to perform the method according to any one of claims 1 to 17.

19. A communication apparatus, wherein the communication apparatus comprises: a processor and an interface circuit;
the interface circuit is configured to: receive computer-executable instructions, and transmit the computer-executable instructions to the processor; and
the processor is configured to execute the computer-executable instructions, to enable the communication apparatus to perform the method according to any one of claims 1 to 17.

20. A computer-readable storage medium, wherein the computer-readable storage medium stores a computer program, and when the computer program is executed by a computer, the computer is enabled to perform the method according to any one of claims 1 to 17.

21. A computer program, wherein the computer program comprises computer instructions, and when the computer instructions are executed by a computer, the computer is enabled to perform the method according to any one of claims 1 to 17.
